(19) Europäisches Patentamt
European Patent Office
Office européen des brevets

(11) EP 2 984 112 B1

(12) # EUROPEAN PATENT SPECIFICATION

(45) Date of publication and mention of the grant of the patent:
**03.06.2020 Bulletin 2020/23**

(21) Application number: **14713871.3**

(22) Date of filing: **01.04.2014**

(51) Int Cl.:
***C08F 110/06*** *(2006.01)*

(86) International application number:
**PCT/EP2014/056519**

(87) International publication number:
**WO 2014/166779 (16.10.2014 Gazette 2014/42)**

(54) **PROCESS FOR THE MANUFACTURE OF POLYPROPYLENE**

VERFAHREN ZUR HERSTELLUNG VON POLYPROPYLEN

PROCESSUS DE FABRICATION DE POLYPROPYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.04.2013 EP 13162891**

(43) Date of publication of application:
**17.02.2016 Bulletin 2016/07**

(73) Proprietor: **Borealis AG**
**1220 Vienna (AT)**

(72) Inventors:
- **GLOGER, Dietrich**
  **A-4020 Linz (AT)**
- **POTTER, Gregory**
  **A-4061 Pasching (AT)**
- **NEISSL, Wolfgang**
  **A-4040 Lichtenberg (AT)**

(74) Representative: **Maiwald Patent- und Rechtsanwaltsgesellschaft mbH**
**Elisenhof**
**Elisenstraße 3**
**80335 München (DE)**

(56) References cited:
**EP-A1- 2 070 954**
**EP-A1- 2 070 956**
**WO-A1-2007/122240**
**WO-A1-2013/016478**
**WO-A1-2013/041470**
**WO-A1-2014/023603**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 984 112 B1

## Description

The present invention is directed to a new process for producing a propylene homopolymer as well as a new propylene homopolymer obtainable by this new process.

Polypropylene is used in many applications and is for instance the material of choice in the field of film capacitors as its chain lacks any kind of polar groups which orient under electrical field stress. As a result, polypropylene intrinsically possesses a low loss factor and high volume resistivity. These properties, combined with a relatively high dielectric constant and self-healing character in the capacitor as well as good mechanical properties, like high melting temperature and high stiffness, make polypropylene so valuable in this technical field. However in case a Ziegler-Natta catalyst has been employed during the manufacture of the polypropylene, typically the dielectric film made from such a polypropylene contains considerable amounts of polar residues, like chlorine, aluminium, titanium, magnesium or silicon originating from the used Ziegler-Natta catalyst. These residues decrease the resistivity, i.e. increase the conductivity of the polymers, making the polymer unsuitable to be used as such in applications, where very low conductivity is needed, like in films for capacitors. Accordingly to make polypropylene commercially attractive in this technical field it must be difficultly purified, typically washed in order to remove the undesired residues from the polymer material, a process which is time consuming and cost-intensive. Typically the purification of the polymer is carried out in an additional step after the last polymerisation step. Accordingly the polymer from the last polymerization step is conducted into a washing step, where the catalyst residues are dissolved out of the polymer material. Washing liquid typically used comprises organic hydrocarbon solvents having polar groups, like hydroxyl groups, e.g. propanol. However due to the washing atactic and low molecular weight material which serves a lubricant during (BOPP) film processing is extracted and thus the processing properties of the polymer material are drastically deteriorated.

The high amount of residues is caused by several factors, wherein productivity plays a central role. In case the productivity of the used catalyst is high during the polymerization process, lower amounts of catalyst can be employed and thus the amount of undesired residues can be reduced.

Accordingly the object of the present invention is to provide a process which enables a skilled person to produce a propylene homopolymer with high productivity by keeping the residue content in the propylene homopolymer low even without the need to apply a troublesome washing step. A further object is to provide a process which additionally enables a skilled artisan to produce a propylene homopolymer with broad molecular weight distribution.

The finding of the present invention is to use a Ziegler Natta catalyst with a specifically selected internal donor and with a very balanced mol-ratio of co-catalyst (Co) to external donor (ED) [Co/ED] and of co-catalyst (Co) to transition metal (TM) [Co/TM], respectively.

Accordingly the present invention is directed to a process for the manufacture of propylene homopolymer (H-PP) in a sequential polymerization system comprising at least two polymerization reactors ((R1) and (R2)) or at least three polymerization reactors ((R1), (R2) and (R3)) connected in series, like in a sequential polymerization system consisting of two polymerization reactors (R1) and (R2) connected in series or consisting of three polymerization reactors (R1), (R2) and (R3) connected in series, wherein the polymerization of propylene in the at least two polymerization reactors ((R1) and (R2)) or in the at least three polymerization reactors ((R1), (R2) and (R3)), like the two polymerization reactors (R1) and (R2) or the three polymerization reactors (R1), (R2) and (R3), takes place in the presence of

(a) a Ziegler-Natta catalyst (ZN-C) comprising a titanium compound (TC) having at least one titanium-halogen bond, and an internal donor (ID), both supported on a magnesium halide,
(b) a co-catalyst (Co), and
(c) an external donor (ED),

wherein

(i) the internal donor (ID) comprises at least 80 wt.-% of a succinate;
(ii) the molar-ratio of co-catalyst (Co) to external donor (ED) [Co/ED] is 10 to 45;
(iii) the molar-ratio of co-catalyst (Co) to titanium compound (TC) [Co/TC] is 8 to 45;
(iv) the propylene homopolymer (H-PP) has a molecular weight distribution (Mw/Mn) of at least 10.0.
(v) optionally the molar-ratio of external donor (ED) to titanium compound [ED/TC] is in the range of more than 0.5 to below 2.6, preferably in the range of 0.7 to 2.0.

Preferably at least one of the two polymerization reactors ((R1) and (R2)) is a gas phase reactor, more preferably one of the two polymerization reactors (R1) and (R2) is a loop reactor (LR) whereas as the other of the two polymerization reactors (R1) and (R2) is a gas phase reactor (GR1), still more preferably the first polymerization reactor (R1) is a loop reactor (LR) and the second polymerization reactor (R2) is a gas phase reactor (GPR1). Accordingly in case the sequential polymerization system consits of two polymerization reactors (R1) and (R2) the first polymerization reactor (R1) is a

loop reactor (LR) and the second polymerization reactor (R2) is a first gas phase reactor (GPR1)

In case the sequential polymerization system comprises, like consits of, three polymerization reactors (R1), (R2) and (R3), at least one, preferably at least two, of the three polymerization reactors ((R1), (R2) and (R2)) is/are (a) gas phase reactors, more preferably one of the three polymerization reactors (R1), (R2) and (R3) is a loop reactor (LR) whereas as the other two of the three polymerization reactors (R1), (R2) and (R3) are gas phase reactors (GR1) and (GR2), still more preferably the first polymerization reactor (R1) is a loop reactor (LR), the second polymerization reactor is a first gas phase reactor (GPR1) and the third polymerization reactor (R2) is a second gas phase reactor (GPR2).

Preferably the operating temperature in the first polymerization reactor (R1) is in the range of 70 to 85 °C and/or the operating temperature in the second polymerization reactor (R2) and optional in the third reactor (R3) is in the range of 75 to 95 °C.

It has been surprisingly found out that a propylene homopolymer (H-PP) produced according to the inventive process has a low residue content. Further the productivity of the applied catalyst is very high. Additionally with the inventive process a high molecular weight distribution can be achieved.

In the following the invention will be described in more detail.

Polymerization process:

One requirement of the present invention is that the propylene homopolymer (H-PP) is produced in a sequential polymerization system comprising at least two reactors, preferably conists of two reactors (R1) and (R2). In another embodiment the propylene homopolymer (H-PP) is produced in a sequential polymerization system comprising at least three reactors (R1), (R2) and (R3), preferably consists of three reactors (R1), (R2) and (R3).

The term "sequential polymerization system" indicates that the propylene homopolymer (H-PP) is produced in at least two reactors connected in series. Accordingly the present polymerization system comprises at least a first polymerization reactor (R1) and a second polymerization reactor (R2), and optionally a third polymerization reactor (R3). The term "polymerization reactor" shall indicate that the main polymerization takes place. Thus in case the process consists of two polymerization reactors, this definition does not exclude the option that the overall system comprises for instance a pre-polymerization step in a pre-polymerization reactor. The term "consist of" is only a closing formulation in view of the main polymerization reactors.

Preferably at least one of the two polymerization reactors (R1) and (R2) is a gas phase reactor (GPR). Still more preferably the second polymerization reactor (R2) and the optional third polymerization reactor (R3) are gas phase reactors (GPRs), i.e a first gas phase reactor (GPR1) and a second gas phase reactor (GPR2). A gas phase reactor (GPR) according to this invention is preferably a fluidized bed reactor, a fast fluidized bed reactor or a settled bed reactor or any combination thereof.

Accordingly, the first polymerization reactor (R1) is preferably a slurry reactor (SR) and can be any continuous or simple stirred batch tank reactor or loop reactor operating in bulk or slurry. Bulk means a polymerization in a reaction medium that comprises of at least 60 % (w/w) monomer. According to the present invention the slurry reactor (SR) is preferably a (bulk) loop reactor (LR). Accordingly the average concentration of propylene homopolymer (H-PP), i.e. the first fraction ($1^{st}$ F) of the propylene homopolymer (H-PP) (i.e. the first propylene homopolymer fraction (H-PP1)), in the polymer slurry within the loop reactor (LR) is typically from 15 wt.-% to 55 wt.-%, based on the total weight of the polymer slurry within the loop reactor (LR). In one preferred embodiment of the present invention the average concentration of the first propylene homopolymer fraction (H-PP1) in the polymer slurry within the loop reactor (LR) is from 20 wt.-% to 55 wt.-% and more preferably from 25 wt.-% to 52 wt.-%, based on the total weight of the polymer slurry within the loop reactor (LR).

Preferably the propylene homopolymer of the first polymerization reactor (R1), i.e. the first propylene homopolymer fraction (H-PP1), more preferably the polymer slurry of the loop reactor (LR) containing the first propylene homopolymer fraction (H-PP1), is directly fed into the second polymerization reactor (R2), i.e. into the (first) gas phase reactor (GPR1), without a flash step between the stages. This kind of direct feed is described in EP 887379 A, EP 887380 A, EP 887381 A and EP 991684 A. By "direct feed" is meant a process wherein the content of the first polymerization reactor (R1), i.e. of the loop reactor (LR), the polymer slurry comprising the the first propylene homopolymer fraction (H-PP1), is led directly to the next stage gas phase reactor.

Alternatively, the propylene homopolymer of the first polymerization reactor (R1), i.e. the first propylene homopolymer fraction (H-PP1), more preferably polymer slurry of the loop reactor (LR) containing the first propylene homopolymer fraction (H-PP1), may be also directed into a flash step or through a further concentration step before fed into the second polymerization reactor (R2), i.e. into the gas phase reactor (GPR). Accordingly, this "indirect feed" refers to a process wherein the content of the first polymerization reactor (R1), of the loop reactor (LR), i.e. the polymer slurry, is fed into the second polymerization reactor (R2), into the (first) gas phase reactor (GPR1), via a reaction medium separation unit and the reaction medium as a gas from the separation unit.

More specifically, the second polymerization reactor (R2), and any subsequent reactor, for instance the third

polymerization reactor (R3), are preferably gas phase reactors (GPRs). Such gas phase reactors (GPR) can be any mechanically mixed or fluid bed reactors. Preferably the gas phase reactors (GPRs) comprise a mechanically agitated fluid bed reactor with gas velocities of at least 0.2 m/sec. Thus it is appreciated that the gas phase reactor is a fluidized bed type reactor preferably with a mechanical stirrer.

Thus in a preferred embodiment the first polymerization reactor (R1) is a slurry reactor (SR), like loop reactor (LR), whereas the second polymerization reactor (R2) and any optional subsequent reactor, like the thrid polymerization reactor (R3), are gas phase reactors (GPRs). Accordingly for the instant process at least two, preferably two polymerization reactors (R1) and (R2) or three polymerization reactors (R1), (R2) and (R3), namely a slurry reactor (SR), like loop reactor (LR) and a (first) gas phase reactor (GPR1) and aoptionally a second gas phase reactor (GPR2), connected in series are used. If needed prior to the slurry reactor (SR) a pre-polymerization reactor is placed.

The Ziegler-Natta catalyst (ZN-C) is fed into the first polymerization reactor (R1) and is transferred with the polymer (slurry) obtained in the first polymerization reactor (R1) into the subsequent reactors. If the process covers also a pre-polymerization step it is preferred that the Ziegler-Natta catalyst (ZN-C) is fed in the pre-polymerization reactor. Subsequently the pre-polymerization product containing the Ziegler-Natta catalyst (ZN-C) is transferred into the first polymerization reactor (R1).

A preferred multistage process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol® process of Basell.

Especially good results are achieved in case the temperature in the reactors is carefully chosen.

Accordingly it is preferred that the operating temperature in the first polymerization reactor (R1) is in the range of 70 to 85 °C, more preferably in the range of 75 to 85 °C, still more preferably in the range of 77 to 83 °C, like in the range of 78 to 82 °C, i.e. 80 °C.

Alternatively or additionally to the previous paragraph it is preferred that the operating temperature in the second polymerization reactor (R2) and optional in the third reactor (R3) is in the range of 75 to 95 °C, more preferably in the range of 78 to 92 °C.

Preferably the operating temperature in the second polymerization reactor (R2) is equal or higher to the operating temperature in the first polymerization reactor (R1). Accordingly it is preferred that the operating temperature

(a) in the first polymerization reactor (R1) is in the range of 70 to 85 °C, more preferably in the range of 75 to 85 °C, still more preferably in the range of 77 to 83 °C, like in the range of 78 to 82 °C, i.e. 80 °C,
and
(b) in the second polymerization reactor (R2) is in the range of 75 to 95 °C, more preferably in the range of 78 to 92 °C, still more preferably in the range of 78 to 88 °C, with the proviso that the operating temperature in the in the second polymerization reactor (R2) is equal or higher to the operating temperature in the first polymerization reactor (R1).

Still more preferably the operating temperature of the third polymerization reactor (R3) - if present - is higher than the the operating temperature in the first polymerization reactor (R1). In one specific embodiment the operating temperature of the third polymerization reactor (R3) - if present - is higher than the operating temperature in the first polymerization reactor (R1) and in the second polymerization reactor (R2). Accordingly it is preferred that the operating temperature

(a) in the first polymerization reactor (R1) is in the range of 70 to 85 °C, more preferably in the range of 75 to 85 °C, still more preferably in the range of 77 to 83 °C, like in the range of 78 to 82 °C, i.e. 80 °C,
(b) in the second polymerization reactor (R2) is in the range of 75 to 95 °C, more preferably in the range of 78 to 92 °C, still more preferably in the range of 78 to 88 °C,
and
(c) in the third polymerization reactor (R3) - if present - is in the range of 75 to 95 °C, more preferably in the range of 80 to 95 °C, still more preferably in the range of 85 to 92 °C, like in the range of 87 to 92 °C,

with the proviso that the operating temperature in the in the second polymerization reactor (R2) is equal or higher to the operating temperature in the first polymerization reactor (R1) and
with the proviso that the third polymerization reactor (R3) is higher than the operating temperature in the first polymerization reactor (R1), preferably is higher than the operating temperature in the first polymerization reactor (R1) and in the second polymerization reactor (R2).

Typically the pressure in the first polymerization reactor (R1), preferably in the loop reactor (LR), is in the range of from 20 to 80 bar, preferably 30 to 70 bar, like 35 to 65 bar, whereas the pressure in the second polymerization reactor

(R2), i.e. in the (first) gas phase reactor (GPR1), and optionally in any subsequent reactor, like in the thrid polymerization reactor (R3), e.g. in the second gas phase reactor (GPR2), is in the range of from 5 to 50 bar, preferably 15 to 35 bar.

Preferably hydrogen is added in each polymerization reactor in order to control the molecular weight, i.e. the melt flow rate $MFR_2$.

Accordingly it is preferred that the hydrogen to propylene feed ratio $[H_2/C_3]$ to the first polymerization reactor (R1) is in the range of 2.5 to 5.0 mol/kmol, more preferably in the range of 2.8 to 4.5 mol/kmol, and/or the hydrogen to propylene feed ratio $[H_2/C_3]$ to the second polymerization reactor (R2) is in the range of 15.0 to 25.0 mol/kmol, more preferably in the range of 16.0 to 22.0 mol/kmol. In case a third polymerization reactor (R3) is present the hydrogen to propylene feed ratio $[H_2/C_3]$ to said reactor is in the range of 10.0 to 20.0 mol/kmol, more preferably in the range of 12.0 to 18.0 mol/kmol. It is especially preferred that the hydrogen and propylene feed are constant over the polymerization time.

Preferably the average residence time is rather long in the polymerization reactors (R1) and (R2). In general, the average residence time (τ) is defined as the ratio of the reaction volume ($V_R$) to the volumetric outflow rate from the reactor ($Q_o$) (i.e. $V_R/Q_o$), i.e $\tau = V_R/Q_o$ [tau = $V_R/Q_o$]. In case of a loop reactor the reaction volume ($V_R$) equals to the reactor volume.

Accordingly the average residence time (τ) in the first polymerization reactor (R1) is preferably at least 20 min, more preferably in the range of 20 to 45 min, still more preferably in the range of 25 to 42 min, like in the range of 28 to 40 min, and/or the average residence time (τ) in the second polymerization reactor (R2) is preferably at least 90 min, more preferably in the range of 90 to 220 min, still more preferably in the range of 100 to 210 min, yet more preferably in the range of 105 to 200 min, like in the range of 105 to 190 min. Preferably the average residence time (τ) in the third polymerization reactor (R3) - if present - is preferably at least 30 min, more preferably in the range of 30 to 90 min, still more preferably in the range of 40 to 80 min, like in the range of 50 to 80 min.

Further it is preferred that the average residence time (τ) in the total sequential polymerization system, more preferably that the average residence time (τ) in the first (R1) second polymerization reactors (R2) and optional third polymerization reactor (R3) together, is at least 160 min, more preferably at least 180 min, still more preferably in the range of 160 to 260 min, more preferably in the range of 180 to 240 min, still more preferably in the range of 190 to 230 min, yet more preferably in the range of 200 to 220 min.

As mentioned above the instant process can comprises in addition to the (main) polymerization of the propylene homopolymer (H-PP) in the at least two polymerization reactors (R1, R3 and optional R3) prior thereto a pre-polymerization in a pre-polymerization reactor (PR) upstream to the first polymerization reactor (R1).

In the pre-polymerization reactor (PR) a polypropylene (Pre-PP) is produced. The pre-polymerization is conducted in the presence of the Ziegler-Natta catalyst (ZN-C). According to this embodiment the Ziegler-Natta catalyst (ZN-C), the co-catalyst (Co), and the external donor (ED) are all introduced to the pre-polymerization step. However, this shall not exclude the option that at a later stage for instance further co-catalyst (Co) is added in the polymerization process, for instance in the first reactor (R1). In one embodiment the Ziegler-Natta catalyst (ZN-C), the co-catalyst (Co), and the external donor (ED) are only added in the pre-polymerization reactor (PR), if a pre-polymerization is applied.

The pre-polymerization reaction is typically conducted at a temperature of 0 to 60 °C, preferably from 15 to 50 °C, and more preferably from 20 to 45 °C.

The pressure in the pre-polymerization reactor is not critical but must be sufficiently high to maintain the reaction mixture in liquid phase. Thus, the pressure may be from 20 to 100 bar, for example 30 to 70 bar.

In a preferred embodiment, the pre-polymerization is conducted as bulk slurry polymerization in liquid propylene, i.e. the liquid phase mainly comprises propylene, with optionally inert components dissolved therein. Furthermore, according to the present invention, an ethylene feed is employed during pre-polymerization as mentioned above.

It is possible to add other components also to the pre-polymerization stage. Thus, hydrogen may be added into the pre-polymerization stage to control the molecular weight of the polypropylene (Pre-PP) as is known in the art. Further, antistatic additive may be used to prevent the particles from adhering to each other or to the walls of the reactor.

The precise control of the pre-polymerization conditions and reaction parameters is within the skill of the art.

Due to the above defined process conditions in the pre-polymerization, preferably a mixture (MI) of the Ziegler-Natta catalyst (ZN-C) and the polypropylene (Pre-PP) produced in the pre-polymerization reactor (PR) is obtained. Preferably the Ziegler-Natta catalyst (ZN-C) is (finely) dispersed in the polypropylene (Pre-PP). In other words, the Ziegler-Natta catalyst (ZN-C) particles introduced in the pre-polymerization reactor (PR) split into smaller fragments which are evenly distributed within the growing polypropylene (Pre-PP). The sizes of the introduced Ziegler-Natta catalyst (ZN-C) particles as well as of the obtained fragments are not of essential relevance for the instant invention and within the skilled knowledge.

As mentioned above, if a pre-polymerization is used, subsequent to said pre-polymerization, the mixture (MI) of the Ziegler-Natta catalyst (ZN-C) and the polypropylene (Pre-PP) produced in the pre-polymerization reactor (PR) is transferred to the first reactor (R1). Typically the total amount of the polypropylene (Pre-PP) in the final propylene homopolymer (H-PP) is rather low and typically not more than 5.0 wt.-%, more preferably not more than 4.0 wt.-%, still more preferably in the range of 0.5 to 4.0 wt.-%, like in the range 1.0 of to 3.0 wt.-%.

In case that pre-polymerization is not used propylene and the other ingredients such as the Ziegler-Natta catalyst (ZN-C) are directly introduced into the first polymerization reactor (R1).

Accordingly the process according the instant invention comprises the following steps under the conditions set out above

(a) in the first polymerization reactor (R1), i.e. in a loop reactor (LR), propylene is polymerized obtaining a first propylene homopolymer fraction (H-PP1) of the propylene homopolymer (H-PP),
(b) transferring said first propylene homopolymer fraction (H-PP1) to a second polymerization reactor (R2),
(c) in the second polymerization reactor (R2) propylene is polymerized in the presence of the first propylene homopolymer fraction (H-PP1) obtaining a second propylene homopolymer fraction (H-PP2) of the propylene homopolymer (H-PP), said first propylene homopolymer fraction (H-PP1) and said second propylene homopolymer fraction (H-PP2) form the propylene homopolymer (H-PP).

A pre-polymerization as described above can be accomplished prior to step (a).

Alternatively the process according the instant invention comprises the following steps under the conditions set out above

(a) in the first polymerization reactor (R1), i.e. in a loop reactor (LR), propylene is polymerized obtaining a first propylene homopolymer fraction (H-PP1) of the propylene homopolymer (H-PP),
(b) transferring said first propylene homopolymer fraction (H-PP1) to a second polymerization reactor (R2),
(c) in the second polymerization reactor (R2) propylene is polymerized in the presence of the first propylene homopolymer fraction (H-PP1) obtaining a second propylene homopolymer fraction (H-PP2) of the propylene homopolymer (H-PP), said first propylene homopolymer fraction (H-PP1) and said second propylene homopolymer fraction (H-PP2) form a first mixture ($1^{st}$ M),
(d) transferring said first mixture ($1^{st}$ M) to the third polymerization reactor (R3), and
(e) in the third polymerization reactor (R3) propylene is polymerized in the presence of the first mixture ($1^{st}$ M) obtaining a third propylene homopolymer fraction (H-PP3) of the propylene homopolymer (H-PP), said first mixture ($1^{st}$ M) and said propylene homopolymer fraction (H-PP3) form the propylene homopolymer (H-PP).

A pre-polymerization as described above can be accomplished prior to step (a).

After step (c) and (e), respectively, the propylene homopolymer (H-PP) is preferably discharged without any washing step. Accordingly in one preferred embodiment the propylene homopolymer (H-PP) is not subjected to a washing step. In other words in a specific embodiment the propylene homopolymer (H-PP) is not subjected to a washing step and optionally converted to pellets. Accordingly it is preferred that the propylene homopolymer (H-PP) is used unwashed in application forming process, like in the process of film making, like in the process for making a biaxially oriented polypropylene film (BOPP-film).

The Ziegler-Natta Catalyst (ZN-C), the external donor (ED) and the co-catalyst (Co)

As pointed out above in the specific process for the preparation of the propylene homopolymer (H-PP) as defined above a Ziegler-Natta catalyst (ZN-C) must be used. Accordingly the Ziegler-Natta catalyst (ZN-C) will be now described in more detail.

The Ziegler-Natta catalyst (ZN-C) comprises a titanium compound (TC), which has at least one titanium-halogen bond, and an internal donor (ID), both supported on magnesium halide, preferably in active form.

The internal donor (ID) used in the present invention comprises a succinate. The internal donor (ID) may in addition to the succinate comprise phthalate or a diether. The preferred internal donor (ID) is a succinate or a mixture of a succinate and a phthalate. It is especially preferred that the internal donor (ID) is a succinate only.

Accordingly it is preferred that the internal donor (ID) comprises succinate of at least 80 wt.-%, more preferably at least 90 wt.-%, still more preferably at least 95 wt.-% and even more preferably at least 99 wt.-%, of the total weight of the internal donor (ID). It is, however, preferred that the internal donor (ID) essentially consists, e.g. is, a succinate.

The Ziegler-Natta catalyst comprising a succinate as defined above as internal donor (ID) can for example be obtained by reaction of an anhydrous magnesium halide with an alcohol, followed by titanation with a titanium halide and reaction with the respective succinate. Such a catalyst comprises 2 to 6 wt.-% of titanium, 10 to 20 wt.-% of magnesium and 5 to 30 wt.-% of internal donor (ID) with chlorine and solvent making up the remainder.

Suitable succinates have the formula

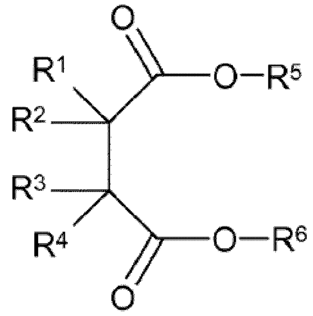

wherein $R^1$ to $R^4$ are equal to or different from one another and are hydrogen, or a $C_1$ to $C_{20}$ linear or branched alkyl, alkenyl, cycloalkyl, aryl, arylalkyl or alkylaryl group, optionally containing heteroatoms, and $R^1$ to $R^4$, being joined to the same carbon atom, can be linked together to form a cycle; and $R^5$ and $R^6$ are equal to or different from one another and are a linear or branched alkyl, alkenyl, cycloalkyl, aryl, arylalkyl or alkylaryl group, optionally containing heteroatoms.

Suitable phthalates are selected from the alkyl, cycloalkyl and aryl phthalates, such as for example diethyl phthalate, diisobutyl phthalate, di-n-butyl phthalate, dioctyl phthalate, diphenyl phthalate and benzylbutyl phthalate.

A Ziegler-Natta catalyst (ZN-C) comprising a succinate as internal donor (ID) is commercially available for example from Basell under the Avant ZN trade name. One particularly preferred Ziegler-Natta catalyst (ZN-C) is the catalyst ZN168M of Basell.

As further component in the instant polymerization process an external donor (ED) must be present. Suitable external donors (ED) include certain silanes, ethers, esters, amines, ketones, heterocyclic compounds and blends of these. It is especially preferred to use a silane. It is most preferred to use silanes of the general formula

$$R^a_pR^b_qSi(OR^c)_{(4-p-q)}$$

wherein $R^a$, $R^b$ and $R^c$ denote a hydrocarbon radical, in particular an alkyl or cycloalkyl group, and wherein p and q are numbers ranging from 0 to 3 with their sum p + q being equal to or less than 3. $R^a$, $R^b$ and $R^c$ can be chosen independently from one another and can be the same or different. Specific examples of such silanes are (tert-butyl)$_2$Si(OCH$_3$)$_2$, (cyclohexyl)(methyl)Si(OCH$_3$)$^2$ (referred to as "C donor"), (phenyl)$_2$Si(OCH$_3$)$_2$ and (cyclopentyl)$_2$Si(OCH$_3$)$_2$ (referred to as "D donor").

The co-catalyst is preferably a compound of group 13 of the periodic table (IUPAC), e.g. organo aluminum, such as an aluminum compound, like aluminum alkyl, aluminum halide or aluminum alkyl halide compound. Accordingly in one specific embodiment the co-catalyst (Co) is a trialkylaluminium, like triethylaluminium (TEAL), dialkyl aluminium chloride or alkyl aluminium sesquichloride. In one specific embodiment the co-catalyst (Co) is triethylaluminium (TEAL).

Advantageously, the triethyl aluminium (TEAL) has a hydride content, expressed as $AlH_3$, of less than 1.0 wt% with respect to the triethyl aluminium (TEAL). More preferably, the hydride content is less than 0.5 wt%, and most preferably the hydride content is less than 0.1 wt%.

Important aspect of the present invention is that the ratio between on the one hand of co-catalyst (Co) and the external donor (ED) [Co/ED] and on the other hand of the co-catalyst (Co) and the transition metal (TM) [Co/TM] have been carefully chosen.

Accordingly

(a) the mol-ratio of co-catalyst (Co) to external donor (ED) [Co/ED] must be in the range of 10 to 45, preferably is in the range of 12 to 45, more preferably is in the range of 15 to 43, still more preferably is in the range of 20 to 42; and
(b) the mol-ratio of co-catalyst (Co) to transition metal (TM) [Co/TM] must be in the range of above 5 to 45, preferably is in the range of 8 to 45, more preferably is in the range of 8 to 43, still more preferably is in the range of 10 to 40, like 17 to 40.

It is especially preferred that the molar-ratio of external donor (ED) to titanium compound [ED/TC] is in the range of more than 0.5 to below 2.6, more preferably in the range of 0.7 to 2.0, still more preferably in the range of 0.8 to 1.8, like 0.8 to 1.5.

Therefore in one particular preferred embodiment

(a) the mol-ratio of co-catalyst (Co) to external donor (ED) [Co/ED] must be in the range of 10 to 45, preferably is in the range of 12 to 45, more preferably is in the range of 15 to 43, still more preferably is in the range of 20 to 42;
(b) the mol-ratio of co-catalyst (Co) to transition metal (TM) [Co/TM] must be in the range of above 8 to 45, preferably

is in the range of 8 to 43, more preferably is in the range of 10 to 40, still more preferably is in the range of 17 to 40; and (c) the molar-ratio of external donor (ED) to titanium compound [ED/TC] is in the range of more than 0.5 to below 2.6, more preferably in the range of 0.7 to 2.0, still more preferably in the range of 0.8 to 1.8, like 0.8 to 1.5.

The propylene homopolymer (H-PP)

With the above described process including the specific defined Ziegler-Natta catalyst (ZN-C) a propylene homopolymer (H-PP) can be produced with high productivity. Accordingly, the propylene homopolymer (H-PP) is in particular featured by low ash content, in particular by low ash content without any purification, i.e. washing step. Accordingly the propylene homopolymer (H-PP) has an ash content of below 30 ppm, i.e. in the range of 8 to below 30 ppm, preferably of below 26 ppm, i.e. 10 to below 26 ppm, more preferably of below 25 ppm, i.e. in the range of 13 to below 25 ppm.

Additionally it is preferred that the magnesium content of the propylene homopolymer (H-PP) is at most 5.0 ppm, preferably at most 4.0 ppm, more preferably at most 3.5 ppm, still more preferably in the range of 0.5 to 3.5 ppm, yet more preferably in the range of 1.0 to 2.5 ppm.

Further it is preferred that the propylene homopolymer (H-PP) comprises at most 30 ppm of aluminum, preferably at most 15 ppm, more preferably in the range of 1.0 to 15 ppm, still more preferably in the range of 2.0 to 10 ppm, yet more preferably in the range of 3.0 to 8.0 ppm.

The propylene homopolymer (H-PP) of the present invention preferably comprises at most 10 ppm of chlorine, more preferably at most 6 ppm, still more preferably at most 5 ppm.

It is preferred that the propylene homopolymer (H-PP) according to this invention is featured by rather high cold xylene soluble (XCS) content, i.e. by a xylene cold soluble (XCS) of at least 2.5, like at least 2.8 wt.-%. Accordingly the propylene homopolymer (H-PP) has preferably a xylene cold soluble content (XCS) in the range of 2.5 to 5.0 wt.-%, more preferably in the range of 2.8 to 4.5 wt.-%, still more preferably in the range of 2.9 to 3.8 wt.-%.

Accordingly the propylene homopolymer (H-PP) is preferably a crystalline. The term "crystalline" indicates that the propylene homopolymer (H-PP) has a rather high melting temperature. Accordingly throughout the invention the propylene homopolymer (H-PP) is regarded as crystalline unless otherwise indicated. Therefore the propylene homopolymer (H-PP) has a melting temperature of more than 158 °C, i.e. of more than 158 to 168, more preferably of more than 160 °C, i.e. of more than 160 to 168 °C, still more preferably in the range of 162 to 165 °C.

Preferably the propylene homopolymer (H-PP) is isotactic. Accordingly it is preferred that the propylene homopolymer (H-PP) has a rather high pentad concentration (mmmm%) i.e. more than 92.0 %, more preferably more than 93.5 %, like more than 93.5 to 97.0 %, still more preferably at least 94.0 %, like in the range of 94.0 to 96.0 %.

A further characteristic of the propylene homopolymer (H-PP) is the low amount of misinsertions of propylene within the polymer chain, which indicates that the propylene homopolymer (H-PP) is produced in the presence of a catalyst as defined above, i.e. in the presence of a Ziegler-Natta catalyst (ZN-C). Accordingly the propylene homopolymer (H-PP) is preferably featured by low amount of 2,1 erythro regio-defects, i.e. of equal or below 0.4 mol.-%, more preferably of equal or below than 0.2 mol.-%, like of not more than 0.1 mol.-%, determined by $^{13}C$-NMR spectroscopy. In an especially preferred embodiment no 2,1 erythro regio-defects are detectable.

Due to the low amounts of regio-defects the propylene homopolymer (H-PP) is additionally characterized by a high content of thick lamella. The specific combination of rather high mmmm pentad concentration and low amount of regio-defects has also impact on the crystallization behaviour of the propylene homopolymer (H-PP). Thus, the propylene homopolymer (H-PP) of the instant invention is featured by long crystallisable sequences and thus by a rather high amount of thick lamellae. To identify such thick lamellae the stepwise isothermal segregation technique (SIST) is the method of choice. Therefore, the propylene homopolymer (H-PP) can be additionally or alternatively defined by the weight ratio of the crystalline fractions melting in the temperature range of above 160 to 180 °C to the crystalline fractions melting in the temperature range of 90 to 160 [(< 160-180)/(90-160)], which is at least 1.20, more preferably in the range of 1.25 to 2.00, still more preferably in the range of 1.30 to 1.80, wherein said fractions are determined by the stepwise isothermal segregation technique (SIST).

In one preferred embodiment of the present invention the propylene homopolymer (H-PP) has an $MFR_2$ (230 °C) of equal or below 10.0 g/10 min, more preferably in the range of 1.5 to 10.0 g/10min, yet more preferably in the range of 2.0 to 8.0 g/10min, still more preferably in the range of 2.5 to 6.0 g/10min.

Alternatively or additionally the propylene homopolymer (H-PP) is defined by its molecular weight distribution (Mw/Mn). Thus it is preferred that the propylene homopolymer (H-PP) has a molecular weight distribution (Mw/Mn) of least 10.0, still more preferably in the range of at least 10.0 to 15.0, yet more preferably in the range of at least 10.0 to 14.0, like in the range of 10.0 to 14.0 or in the range of 11.0 to 13.5. According to the present invention the expression "polypropylene homopolymer (H-PP)" relates to a polypropylene that consists substantially, i.e. of at least 99.0 wt.-%, more preferably of at least 99.5 wt.-%, of propylene units. In another embodiment no ethylene in the propylene homopolymer (H-PP) is detectable.

As mentioned in the section "polymerization process" the propylene homopolymer (H-PP) is produced in at least two polymerization reactors (R1) and (R2), like in at least three polymerization reactors (R1), (R2) and (R3). Thus in one preferred embodiment the propylene homopolymer (H-PP) is produced in two polymerization reactors (R1) and (R2). In another preferred embodiment the propylene homopolymer (H-PP) is produced in three polymerization reactors (R1); (R2) and (R3).Accordingly the propylene homopolymer (H-PP) comprises, preferably consists of, two fractions, namely a first propylene homopolymer fraction (H-PP1) and a second propylene homopolymer fraction (H-PP2). In another embodiment the the propylene homopolymer (H-PP) comprises, preferably consists of, three fractions, namely a first propylene homopolymer fraction (H-PP1), a second propylene homopolymer fraction (H-PP2) and a third propylene homopolymer fraction (H-PP3).

Preferably the weight ratio between the first propylene homopolymer fraction (H-PP1) and the second propylene homopolymer fraction (H-PP2) [(H-PP1):(H-PP2)] is 70:30 to 35:65, more preferably 60:40 to 40:60.

Preferably the weight ratio between the second propylene homopolymer fraction (H-PP2) and the third propylene homopolymer fraction (H-PP3) [(H-PP2):(H-PP3)] is 80:20 to 40:60, more preferably 75:25 to 45:55.

In case the propylene homopolymer (H-PP) consits of the first propylene homopolymer fraction (H-PP1) and the second propylene homopolymer fraction (H-PP2), it is preferred that the weight ratio between the first propylene homopolymer fraction (H-PP1) and the second propylene homopolymer fraction (H-PP2) [(H-PP1):(H-PP2)] is 70:30 to 40:60, more preferably 60:40 to 45:55, yet more preferably 55:45 to 50:50.

In case the propylene homopolymer (H-PP) consits of the first propylene homopolymer fraction (H-PP1), the second propylene homopolymer fraction (H-PP2) and the third propylene homopolymer fraction (H-PP3), it is preferred that the weight ratio between the first propylene homopolymer fraction (H-PP1) and the second propylene homopolymer fraction (H-PP2) is 60:40 to 35:65, more preferably 55:45 to 40:60, yet more preferably 50:50 to 42:58 and the weight ratio between the second propylene homopolymer fraction (H-PP2) and the third propylene homopolymer fraction (H-PP3) [(H-PP2):(H-PP3)] is 80:20 to 40:60, more preferably 75:25 to 45:55., still more preferably 72:28 to 50:50.

Preferably the first propylene homopolymer fraction (H-PP1) has the same or lower melt flow rate $MFR_2$ (230 °C) than the second propylene homopolymer fraction (H-PP2). Preferably the first propylene homopolymer fraction (H-PP1) has a lower melt flow rate $MFR_2$ (230 °C) than the second propylene homopolymer fraction (H-PP2). In case a third propylene homopolymer fraction (H-PP3) is present, said fraction preferably has the same or higher melt flow rate $MFR_2$ (230 °C) than the second propylene homopolymer fraction (H-PP2).

Thus it is preferred that the first propylene homopolymer fraction (H-PP1) and the second propylene homopolymer fraction (H-PP2) fulfill together the inequation (I), more preferably inequation (Ia),

$$4.0 \geq \frac{MFR\ (\text{H-PP2})}{MFR\ (\text{H-PP1})} \geq 1.0 \qquad \text{(I)}$$

$$3.0 \geq \frac{MFR\ (\text{H-PP2})}{MFR\ (\text{H-PP1})} \geq 1.1 \qquad \text{(Ia)}$$

wherein

MFR (H-PP1) is the melt flow rate $MFR_2$ (230 °C) [g/10min] of the first propylene homopolymer fraction (H-PP1),
MFR (H-PP2) is the melt flow rate $MFR_2$ (230 °C) [g/10min] of the second propylene homopolymer fraction (H-PP2).

The inequations (I) and (Ia) are in particular applicable in case the propylene homopolymer (H-PP) consists of the first propylene homopolymer fraction (H-PP1) and the second propylene homopolymer fraction (H-PP2).

Additionally it is preferred that the second propylene homopolymer fraction (H-PP2) and the third propylene homopolymer fraction (H-PP3) fulfill together the inequation (II), more preferably inequation (IIa),

$$2.0 \geq \frac{MFR\ (\text{H-PP3})}{MFR\ (\text{H-PP2})} \geq 0.5 \qquad \text{(II)}$$

$$1.7 \geq \frac{MFR\ (\text{H-PP3})}{MFR\ (\text{H-PP2})} \geq 0.7 \qquad \text{(IIa)}$$

wherein

MFR (H-PP2) is the melt flow rate $MFR_2$ (230 °C) [g/10min] of the second propylene homopolymer fraction (H-PP2), MFR (H-PP3) is the melt flow rate $MFR_2$ (230 °C) [g/10min] of the thrid propylene homopolymer fraction (H-PP3).

The inequations (II) and (IIa) are in particular applicable in case the propylene homopolymer (H-PP) consists of the first propylene homopolymer fraction (H-PP1), the second propylene homopolymer fraction (H-PP2) and the thrid propylene homopolymer fraction (H-PP3).

Additionally or alternatively it is preferred that the first propylene homopolymer fraction (H-PP1) and the propylene homopolymer (H-PP) fulfill together the inequation (III), more preferably inequation (IIIa), still more preferably inequation (IIIb),

$$3.0 \geq \frac{MFR\ (\text{H-PP})}{MFR\ (\text{H-PP1})} \geq 1.0 \qquad \text{(III)}$$

$$2.0 \geq \frac{MFR\ (\text{H-PP})}{MFR\ (\text{H-PP1})} \geq 1.1 \qquad \text{(IIIa)}$$

$$1.8 \geq \frac{MFR\ (\text{H-PP})}{MFR\ (\text{H-PP1})} \geq 1.2 \qquad \text{(IIIb)}$$

wherein

MFR (H-PP1) is the melt flow rate $MFR_2$ (230 °C) [g/10min] of the first propylene homopolymer fraction (H-PP1), MFR (H-PP) is the melt flow rate $MFR_2$ (230 °C) [g/10min] of the propylene homopolymer (H-PP).

Preferably the first propylene homopolymer fraction (H-PP1) has a melt flow rate $MFR_2$ (230 °C) in the range of in the range of 1.5 to 8.0 g/10min, more preferably in the range 2.0 to 6.0 g/10min, still more preferably in the range of 2.0 to 5.0 g/10min.

Preferably the second propylene homopolymer fraction (H-PP2) has a melt flow rate $MFR_2$ (230 °C) in the range of in the range of 1.5 to 11.5 g/10min, more preferably in the range of more than 2.0 to 10.0 g/10min, more preferably in the range of 2.4 to 9.0 g/10min.

Preferably the third propylene homopolymer fraction (H-PP3) - if present - has a melt flow rate $MFR_2$ (230 °C) in the range of in the range of 1.5 to 11.5 g/10min, more preferably in the range of more than 2.0 to 8.0 g/10min, more preferably in the range of 2.4 to 7.0 g/10min.

Preferably the first propylene homopolymer fraction (H-PP1) is produced in the first polymerization reactor (R1) whereas the second propylene homopolymer fraction (H-PP2) is produced in the second polymerization reactor (R2). The thrid propylene homopolymer fraction (H-PP3) - if present - is preferably produced in the third polymerization reactor (R3).

The propylene homopolymer (H-PP) as defined in the instant invention may contain up to 5.0 wt.-% additives, like nucleating agents and antioxidants, as well as slip agents and antiblocking agents. Preferably the additive content is below 3.0 wt.-%, like below 1.0 wt.-%.

In a specific embodiment the present invention is directed to a propylene homopolymer (H-PP) having

(a) a melt flow rate $MFR_2$ (230 °C) measured according to ISO 1133 in the range of 1.5 to 10.0 g/10min, preferably in the range of 2.0 to 8.0 g/10min, more preferably in the range of 2.5 to 6.0 g/10min;
(b) a molecular weight distribution (MWD) of more than 9.0, preferably of at least 10.0, still more preferably in the range of more than 9.0 to 15.0, yet more preferably in the range of at least 10.0 to 14.0, like in the range of 11.0 to 13.5;
(c) a xylene cold soluble content (XCS) determined according ISO 16152 (25 °C) of at least 2.8 wt.-%, preferably in the range of 2.5 to 5.0 wt.-%, more preferably in the range of 2.5 to 4.5 wt.-%, still more preferably in the range of 2.9 to 3.8 wt.-%.
(d) a pentad isotacticity (mmmm) of more than 93.5 mol.-%, preferably in the range of more than 93.5 to 97.0 mol-%, more preferably of at least 94.0 %, still more preferably in the range of 94.0 to 96.0 %; and
(e) an ash content below 30 ppm, preferably below 25 ppm, more preferably in the range of 8 to below 30 ppm, still more preferably in the range of 10 to below 26 ppm, yet more preferably in the range of 13 to below 25 ppm.

Preferably the propylene homopolymer (H-PP) of the previous paragraph has a first propylene homopolymer

fraction (H-PP1) and a second propylene homopolymer fraction (H-PP2), wherein optionally further

(a) the first propylene homopolymer fraction (H-PP1) and the second propylene homopolymer fraction (H-PP2) fulfill together the inequation (I),preferably inequation (Ia),

$$4.0 \geq \frac{MFR\ (\text{H}-\text{PP2})}{MFR\ (\text{H}-\text{PP1})} \geq 1.0 \qquad \text{(I)}$$

$$3.0 \geq \frac{MFR\ (\text{H}-\text{PP2})}{MFR\ (\text{H}-\text{PP1})} \geq 1.1 \qquad \text{(Ia)}$$

wherein

MFR (H-PP1) is the melt flow rate $MFR_2$ (230 °C) [g/10min] of the first propylene homopolymer fraction (H-PP1),
MFR (H-PP2) is the melt flow rate $MFR_2$ (230 °C) [g/10min] of the second propylene homopolymer fraction (H-PP2);
and/or

(b) the first propylene homopolymer fraction (H-PP1) and the propylene homopolymer (H-PP) fulfill together the inequation (III), preferably inequation (IIIa), more preferably preferably inequation (IIIb),

$$3.0 \geq \frac{MFR\ (\text{H}-\text{PP})}{MFR\ (\text{H}-\text{PP1})} \geq 1.0 \qquad \text{(III)}$$

$$2.0 \geq \frac{MFR\ (\text{H}-\text{PP})}{MFR\ (\text{H}-\text{PP1})} \geq 1.1 \qquad \text{(IIIa)}$$

$$1.8 \geq \frac{MFR\ (\text{H}-\text{PP})}{MFR\ (\text{H}-\text{PP1})} \geq 1.2 \qquad \text{(IIIb)}$$

wherein

MFR (H-PP1) is the melt flow rate $MFR_2$ (230 °C) [g/10min] of the first propylene homopolymer fraction (H-PP1),
MFR (H-PP) is the melt flow rate $MFR_2$ (230 °C) [g/10min] of the propylene homopolymer (H-PP);
and/or,

(c) the weight ratio between the first propylene homopolymer fraction (H-PP1) and the second propylene homopolymer fraction (H-PP2) [(H-PP1):(H-PP2)] is 70:30 to 40:60, preferably 60:40 to 45:55, more preferably 55:45 to 50:50.

In another preferred embodiment of the propylene homopolymer (H-PP) described two paragraphs above, said propylene homopolymer (H-PP) has a first propylene homopolymer fraction (H-PP1) and a second propylene homopolymer fraction (H-PP2) and a third propylene homopolymer fraction (H-PP3), wherein optionally further

(a) the first propylene homopolymer fraction (H-PP1) and the second propylene homopolymer fraction (H-PP2) fulfill together the inequation (I),preferably inequation (Ia),

$$4.0 \geq \frac{MFR\ (\text{H}-\text{PP2})}{MFR\ (\text{H}-\text{PP1})} \geq 1.0 \qquad \text{(I)}$$

$$3.0 \geq \frac{MFR\ (\text{H}-\text{PP2})}{MFR\ (\text{H}-\text{PP1})} \geq 1.1 \qquad \text{(Ia)}$$

wherein

MFR (H-PP1) is the melt flow rate $MFR_2$ (230 °C) [g/10min] of the first propylene homopolymer fraction (H-PP1), MFR (H-PP2) is the melt flow rate $MFR_2$ (230 °C) [g/10min] of the second propylene homopolymer fraction (H-PP2);

(b) the second propylene homopolymer fraction (H-PP2) and the third propylene homopolymer fraction (H-PP3) fulfill together the inequation (II),preferably inequation (IIa),

$$2.0 \geq \frac{MFR\ (\text{H-PP3})}{MFR\ (\text{H-PP2})} \geq 0.5 \qquad (\text{II})$$

$$1.7 \geq \frac{MFR\ (\text{H-PP3})}{MFR\ (\text{H-PP2})} \geq 0.7 \qquad (\text{IIa})$$

wherein

MFR (H-PP2) is the melt flow rate $MFR_2$ (230 °C) [g/10min] of the second propylene homopolymer fraction (H-PP2),
MFR (H-PP3) is the melt flow rate $MFR_2$ (230 °C) [g/10min] of the thrid propylene homopolymer fraction (H-PP3), and/or

(c) the first propylene homopolymer fraction (H-PP1) and the propylene homopolymer (H-PP) fulfill together the inequation (III), preferably inequation (IIIa), more preferably preferably inequation (IIIb),

$$3.0 \geq \frac{MFR\ (\text{H-PP})}{MFR\ (\text{H-PP1})} \geq 1.0 \qquad (\text{III})$$

$$2.0 \geq \frac{MFR\ (\text{H-PP})}{MFR\ (\text{H-PP1})} \geq 1.1 \qquad (\text{IIIa})$$

$$1.8 \geq \frac{MFR\ (\text{H-PP})}{MFR\ (\text{H-PP1})} \geq 1.2 \qquad (\text{IIIb})$$

wherein

MFR (H-PP1) is the melt flow rate $MFR_2$ (230 °C) [g/10min] of the first propylene homopolymer fraction (H-PP1), MFR (H-PP) is the melt flow rate $MFR_2$ (230 °C) [g/10min] of the propylene homopolymer (H-PP);
and/or,

(d) the weight ratio between the first propylene homopolymer fraction (H-PP1) and the second propylene homopolymer fraction (H-PP2) is 60:40 to 35:65, more preferably 55:45 to 40:60, yet more preferably 50:50 to 42:58 and the weight ratio between the second propylene homopolymer fraction (H-PP2) and the third propylene homopolymer fraction (H-PP3) [(H-PP2):(H-PP3)] is 80:20 to 40:60, more preferably 75:25 to 45:55., still more preferably 72:28 to 50:50.

Concerning 2,1 erythro regio-defects, melting temperature Tm and crystalline fractions of the preferred propylene homopolymer (H-PP) of the present invention reference is made to the information provided above.
Further, all preferred embodiments of the described propylene homopolymer (H-PP) are also preferred products of the defined process of the instant invention.

Biaxially oriented film / Capacitor film

The propylene homopolymer (H-PP) as defined can subjected to a film forming process obtaining thereby a

capacitor film. Preferably the propylene homopolymer (H-PP) is the only polymer within the capacitor film. Accordingly the capacitor film may contain additives but preferably no other polymer. Thus the remaining part up to 100.0 wt-% may be accomplished by additives known in the art, like antioxidants. However this remaining part shall be not more than 5.0 wt.-%, preferably not more than 2.0 wt.-%, like not more than 1.0 wt.-%, within the capacitor film. Accordingly the capacitor film preferably comprises more than 95.0 wt.-%, more preferably more 98.0 wt.-%, like more than 99.0 wt.-%, e.g. consits, of the propylene homopolymer (H-PP) as defined herein.

The thickness of the capacitor film can be up to 15.0 μm, however, typically the capacitor film has a thickness of not more than 12.0 μm, preferably not more than 10.0 μm, more preferably not more than 8.0 μm, yet more preferably in the range of 2.5 to 10 μm, like in the range of 3.0 to 8,0 μm.

Further it is preferred that the capacitor film is a biaxially oriented film, i.e. the propylene homopolymer (H-PP), as defined above or any mixtures (blends) comprising the propylene homopolymer (H-PP), has/have been subjected to a drawing process obtaining thereby a biaxially oriented polymer. As indicated above capacitor film preferably contains the propylene homopolymer (H-PP) as only polymer and thus it is preferably a biaxially oriented polypropylene (BOPP) made from said propylene homopolymer (H-PP).

Preferably the capacitor film, i.e. the biaxially oriented polypropylene (BOPP), has a draw ratio in machine direction of at least 3.0 and a draw ratio in transverse direction of at least 3.0. Such ratios are appreciated as commercial biaxially oriented polypropylene films must be stretchable at least to the above defined extent without breaking. The length of the sample increases during stretching in longitudinal direction and the draw ratio in longitudinal direction calculates from the ratio of current length over original sample length. Subsequently, the sample is stretched in transverse direction where the width of the sample is increasing. Hence, the draw ratio calculates from the current width of the sample over the original width of the sample. Preferably the draw ratio in machine direction of the capacitor film, i.e. of the biaxially oriented polypropylene (BOPP), ranges from 3.5 to 8.0, more preferably from 4.5 to 6.5. The draw ratio in transverse direction of the capacitor film, i.e. of the biaxially polypropylene (BOPP), ranges preferably from 4.0 to 15.0, more preferably from 6.0 to 10.0. Temperature range during stretching is in general 100 °C to 180 °C.

As the capacitor film, i.e. the biaxially oriented polypropylene (BOPP), preferably is produced from the propylene homopolymer (H-PP) as defined above, the properties given for the propylene homopolymer (H-PP) are equally applicable for the capacitor film if not specified differently.

Preferably the propylene homopolymer (H-PP) is biaxially oriented.

After the preparation of the propylene homopolymer (H-PP) said polymer is subjected to a film forming process. Any film forming processes which are suitable for the manufacture of a capacitor film can be used.

In a preferred embodiment the propylene homopolymer (H-PP) is not subjected to a washing step prior to the film forming process.

The capacitor film, i.e. the biaxially oriented polypropylene (BOPP), can be prepared by conventional drawing processes known in the art. Accordingly the process for the manufacture of a capacitor film, i.e. the biaxially oriented polypropylene (BOPP), according to this invention comprises the use of the propylene homopolymer (H-PP) as defined herein and it's forming into a film preferably by the tenter method known in the art.

The tenter method is in particular a method in which the propylene homopolymer (H-PP) as defined herein is melt extruded from a slit die such as a T-die and cooled on a cooling drum obtaining an undrawn sheet. Said sheet is pre-heated for example with a heated metal roll and then drawn in the length direction between a plurality of rolls over which a difference in peripheral speeds is established and then both edges are gripped with grippers and the sheet is drawn in the transverse direction in an oven by means of a tenter resulting in a biaxially drawn film. The temperature of said stretched sheet during the longitudinal drawing is preferably controlled in such a way as to be within the temperature range of the melting point of the polypropylene as defined herein (machine direction: -20 to -10°C; transverse direction: -5 to +10°C). The uniformity of the film thickness on transverse drawing can be evaluated with the method in which a fixed region on the film is masked after drawing in the length direction and measuring the actual drawing factor by measuring the spacing of the said masking after transverse drawing.

Subsequently, the capacitor film, i.e. the biaxially oriented film (BOPP), can be treated by corona discharge in air, nitrogen, carbon dioxide gas or any of the mixtures on the surface to be metalized, to improve the adhesive strength to the metal to be deposited, and wound by a winder.

In the following the present invention is further illustrated by means of examples.

## EXAMPLES

### A. Measuring methods

The following definitions of terms and determination methods apply for the above general description of the invention including the claims as well as to the below examples unless otherwise defined.

**Quantification of microstructure by NMR spectroscopy**

Quantitative nuclear-magnetic resonance (NMR) spectroscopy was used to quantify the isotacticity and regio-regularity of the polypropylene homopolymers.

Quantitative $^{13}C\{^{1}H\}$ NMR spectra were recorded in the solution-state using a Bruker Advance III 400 NMR spectrometer operating at 400.15 and 100.62 MHz for $^{1}H$ and $^{13}C$ respectively. All spectra were recorded using a $^{13}C$ optimised 10 mm extended temperature probehead at 125°C using nitrogen gas for all pneumatics.

For polypropylene homopolymers approximately 200 mg of material was dissolved in 1,2-tetrachloroethane-$d_2$ (TCE-$d_2$). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromolecules 30 (1997) 6251). Standard single-pulse excitation was employed utilising the NOE and bi-level WALTZ 16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra.

Quantitative $^{13}C\{^{1}H\}$ NMR spectra were processed, integrated and relevant quantitative properties determined from the integrals using proprietary computer programs.

For polypropylene homopolymers all chemical shifts are internally referenced to the methyl isotactic pentad (mmmm) at 21.85 ppm.

Characteristic signals corresponding to regio defects (Resconi, L., Cavallo, L., Fait, A., Piemontesi, F., Chem. Rev. 2000, 100, 1253;; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest(Busico, V., Cipullo, R., Prog. Polym. Sci. 26 (2001) 443; Busico, V., Cipullo, R., Monaco, G., Vacatello, M., Segre, A.L., Macromolecules 30 (1997) 6251).

Specifically the influence of regio-defects and comonomer on the quantification of the tacticity distribution was corrected for by subtraction of representative regio-defect and comonomer integrals from the specific integral regions of the stereo sequences.

The isotacticity was determined at the pentad level and reported as the percentage of isotactic pentad (mmmm) sequences with respect to all pentad sequences:

$$[mmmm]\ \% = 100 * (mmmm / \text{sum of all pentads})$$

The presence of 2,1 erythro regio-defects was indicated by the presence of the two methyl sites at 17.7 and 17.2 ppm and confirmed by other characteristic sites. Characteristic signals corresponding to other types of regio-defects were not observed (Resconi, L., Cavallo, L., Fait, A., Piemontesi, F., Chem. Rev. 2000, 100, 1253).

The amount of 2,1 erythro regio-defects was quantified using the average integral of the two characteristic methyl sites at 17.7 and 17.2 ppm:

$$P_{21e} = (I_{e6} + I_{e8}) / 2$$

The amount of 1,2 primary inserted propene was quantified based on the methyl region with correction undertaken for sites included in this region not related to primary insertion and for primary insertion sites excluded from this region:

$$P_{12} = I_{CH3} + P_{12e}$$

The total amount of propene was quantified as the sum of primary inserted propene and all other present regio-defects:

$$P_{total} = P_{12} + P_{21e}$$

The mole percent of 2,1 erythro regio-defects was quantified with respect to all propene:

$$[21e]\ mol.\text{-}\% = 100 * (P_{21e} / P_{total})$$

**Calculation** of melt flow rate $MFR_2$ (230 °C) of the second propylene homopolymer fraction (H-PP2):

$$MFR(PP2) = 10^{\left[\frac{\log(MFR(PP)) - w(PP1)\ x\ \log(MFR(PP1))}{w(PP2)}\right]}\ (I)$$

wherein

| | |
|---|---|
| w(PP1) | is the weight fraction [in wt.-%] of the first propylene homopolymer fraction (H-PP1), |
| w(PP2) | is the weight fraction [in wt.-%] of the second propylene homopolymer fraction (H-PP2), |
| MFR(PP1) | is the melt flow rate $MFR_2$ (230 °C) [in g/10min] of the first propylene homopolymer fraction (H-PP1), |
| MFR(PP) | is the melt flow rate $MFR_2$ (230 °C) [in g/10min] of the propylene homopolymer (H-PP), |
| MFR(PP2) | is the calculated melt flow rate $MFR_2$ (230 °C) [in g/10min] of the second propylene homopolymer fraction (H-PP2). |

**Calculation** of melt flow rate $MFR_2$ (230 °C) of the third propylene homopolymer fraction (H-PP3):

$$MFR(PP3) = 10^{\left[\frac{\log(MFR(PP)) - w(PP2)\ x\ \log(MFR(PP2))}{w(PP3)}\right]}\ (II)$$

wherein

| | |
|---|---|
| w(PP2) | is the weight fraction [in wt.-%] of the propylene homopolymer fractions (H-PP1) and (H-PP2) together, |
| w(PP3) | is the weight fraction [in wt.-%] of the third propylene homopolymer fraction (H-PP3), |
| MFR(PP2) | is the melt flow rate $MFR_2$ (230 °C) [in g/10min] of the mixture of the propylene homopolymer fractions (H-PP1) and (H-PP2) together, i.e. in the second polymerization reactor (R2) |
| MFR(PP) | is the melt flow rate $MFR_2$ (230 °C) [in g/10min] of the propylene homopolymer (H-PP), |
| MFR(PP3) | is the calculated melt flow rate $MFR_2$ (230 °C) [in g/10min] of the third propylene homopolymer fraction (H-PP3). |
| **$MFR_2$ (230 °C)** | is measured according to ISO 1133 (230 °C, 2.16 kg load) |

**Number average molecular weight ($M_n$), weight average molecular weight ($M_w$) and molecular weight distribution (MWD)**

Molecular weight averages (Mw, Mn), Molecular weight distribution (MWD) and its broadness, described by Mw/Mn (wherein Mn is the number average molecular weight and Mw is the weight average molecular weight) were determined by Gel Permeation Chromatography (GPC) according to ISO 16014-4:2003 and ASTM D 6474-99. A PolymerChar GPC instrument, equipped with infrared (IR) detector was used with 3 x Olexis and 1x Olexis Guard columns from Polymer Laboratories and 1,2,4-trichlorobenzene (TCB, stabilized with 250 mg/L 2,6-Di tert butyl-4-methyl-phenol) as solvent at 160 °C and at a constant flow rate of 1 mL/min. 200 μL of sample solution were injected per analysis. The column set was calibrated using universal calibration (according to ISO 16014-2:2003) with at least 15 narrow MWD polystyrene (PS) standards in the range of 0,5 kg/mol to 11 500 kg/mol. Mark Houwink constants for PS, PE and PP used are as described per ASTM D 6474-99. All samples were prepared by dissolving 5.0 - 9.0 mg of polymer in 8 mL (at 160 °C) of stabilized TCB (same as mobile phase) for 2.5 hours for PP or 3 hours for PE at max. 160°C under continuous gentle shaking in the autosampler of the GPC instrument.

**The xylene soluble fraction at room temperature (XS, wt.-%):** The amount of the polymer soluble in xylene is determined at 25 °C according to ISO 16152; first edition; 2005-07-01.

**DSC analysis, melting temperature ($T_m$):** measured with a TA Instrument Q200 differential scanning calorimetry (DSC) on 5 to 7 mg samples. DSC is run according to ISO 3146 / part 3 /method C2 in a heat / cool / heat cycle with a scan rate of 10 °C/min in the temperature range of -30 to +225°C. Crystallization temperature is determined from the cooling step, while melting temperature is determined from the second heating step.

**The ash content** is measured according to ISO 3451-1 (1997).

**ICP (inductively coupled plasma) analysis**

Inductively coupled plasma emission spectrometry (ICP) is an analytical technique used for the detection of trace metals. It is a type of emission spectroscopy that uses the inductively coupled plasma (argon) to produce excited atoms and ions that emit electromagnetic radiation at wavelengths characteristic of a particular element. The intensity of this emission is indicative of the concentration of the element within the sample.

Apparatus used: Optima 2000DV from Perkin-Elmer

Titanium, aluminium and magnesium in pellets are determined with ICP. Acid standards are used as reference.

Sample preparation

Samples (sample weight [g]) are first ashed following DIN EN ISO 3451-1 and the ash is dissolved in $H_2SO_4$ 1N (sample conc. [mg/l])

Standards:

Standard Titanium solution (Merck): 1000 ppm Ti = stock solution A
Standard Aluminium solution (Merck): 1000 ppm Al = stock solution B
Standard Magnesium solution (Merck): 1000 ppm Mg = stock solution C
Standard 10 ppm Ti, Al, Mg

1 ml of the respective stock solution is diluted in a volumetric flask up to 100 ml with distilled water

Acid standard 10 ppm Ti, 10 ppm Al and 10 ppm Mg

1 ml stock solutions A, B and C are put in a 100 ml volumetric flask. 2 g $KHSO_4$ and 25 ml $H_2SO_4$ 1N are added and diluted up to 100 ml with distilled water = standard high concentration

Acid standard 1 ppm Ti, 1 ppm Al and 1 ppm Mg

10 ml of each standard 10 ppm Ti, AL, Mg are put in a 100 ml volumetric flask. 2 g $KHSO_4$ and 25 ml $H_2SO_4$ IN are added and dilute up to 100 ml with distilled water = standard low concentration

Blank sample for determination of Al, Ti and Mg

25 ml $H_2SO_4$ and 2 g $KHSO_4$ are put in a 100 ml volumetric flask and diluted up to 100 ml with distilled water = standard blank Al, Ti, Mg

The obtained results of the standard low concentration and standard high concentration are inspected in the calibration summary. The "RSD value" (relative standard deviation value) of the standard should always be ≤10%. The obtained results must be close to the real value of the standards used. The calibration summary is checked. The correlation coefficient must be ≥0.997.

The samples are analysed 3 times each. The obtained results are checked and ensured that the RSD ≤10%.

The average value of 3 determinations is reported.

Calculate the concentration of the element (ppm) as:

$$\frac{\text{Sample conc (mg/l) x 100}}{\text{Sample weight used for calcinations (g)}}$$

**Stepwise Isothermal Segregation Technique (SIST)**

The isothermal crystallisation for SIST analysis was performed in a Mettler TA820 DSC on 3±0.5 mg samples at decreasing temperatures between 200°C and 105°C.

(i) the samples were melted at 225 °C for 5 min.,
(ii) then cooled with 80 °C/min to 145 °C
(iii) held for 2 hours at 145 °C,
(iv) then cooled with 80 °C/min to 135 °C
(v) held for 2 hours at 135 °C,
(vi) then cooled with 80 °C/min to 125 °C
(vii) held for 2 hours at 125 °C,
(viii) then cooled with 80 °C/min to 115 °C

(ix) held for 2 hours at 115 °C,
(x) then cooled with 80 °C/min to 105 °C
(xi) held for 2 hours at 105 °C.

After the last step the sample was cooled down with 80 °C/min to -10 °C and the melting curve was obtained by heating the cooled sample at a heating rate of 10°C/min up to 200°C. All measurements were performed in a nitrogen atmosphere. The melt enthalpy is recorded as function of temperature and evaluated through measuring the melt enthalpy of fractions melting within temperature intervals of
50 to 60 °C; 60 to 70 °C; 70 to 80 °C; 80 to 90 °C; 90 to 100 °C; 100 to 110 °C; 110 to 120 °C; 120 to 130 °C; 130 to 140 °C; 140 to 150 °C; 150 to 160 °C; 160 to 170 °C; 170 to 180 °C; 180 to 190 °C; 190 to 200 °C.

**B. Examples**

The catalyst used in the polymerization process for the polypropylene of the inventive examples (IE1 to IE6) and the comparative examples (CE1 to CE4) was the commercial Ziegler-Natta catalyst ZN168M catalyst (succinate as internal donor, 2.5 wt% Ti) from Lyondell-Basell was used along with triethyl-aluminium (TEAL) as co-catalyst and dicyclo pentyl dimethoxy silane (D-donor) as donor.

The aluminium to donor ratio, the aluminium to titanium ratio and the polymerization conditions are indicated in table 1.

**Table 1a**: Preparation of inventive propylene homopolymers (H-PP)

| | | **IE1** | **IE2** | **IE3** | **IE4** | **IE5** | **IE6** |
|---|---|---|---|---|---|---|---|
| TEAL/Ti | [mol/mol] | 40 | 19 | 25 | 35 | 35 | 17 |
| TEAL/Donor | [mol/mol] | 40 | 25 | 40 | 25 | 25 | 10 |
| Donor/Ti | [mol/mol] | 1.0 | 0.8 | 0.6 | 1.4 | 1.4 | 1.7 |
| LOOP | | | | | | | |
| time | [min] | 30 | 30 | 30 | 30 | 30 | 35 |
| temp | [°C] | 80 | 80 | 80 | 80 | 80 | 78 |
| split | [wt.-%] | 51 | 49 | 52 | 51 | 50 | 34.7 |
| $MFR_2$ | [g/10'] | 4.0 | 4.0 | 4.0 | 4.0 | 4.0 | 2.1 |
| H2/C3 | [mol/kmol] | 3.45 | 3.46 | 3.46 | 3.46 | 3.46 | 2.3 |
| pressure | [bar] | 37.3 | 37.3 | 37.3 | 37.3 | 37.3 | |
| **GPR1** | | | | | | | |
| time | [min] | 180 | 180 | 180 | 180 | 180 | 105 |
| temp | [°C] | 80 | 80 | 80 | 80 | 80 | 85 |
| split | [wt.-%] | 49 | 51 | 48 | 49 | 50 | 45.3 |
| $MFR_2$ | [g/10'] | 6.9 | 8.5 | 9.6 | 8.2 | 7.0 | 2.4 |
| H2/C3 | mol/kmol | 18.33 | 18.33 | 18.33 | 18.33 | 18.33 | 10.46 |
| pressure | [bar] | 22 | 22 | 22 | 22 | 22 | 21 |
| **GPR2** | | | | | | | |
| time | [min] | | | | | | 65 |
| temp | [°C] | | | | | | 90 |
| split | [wt.-%] | | | | | | 20 |
| $MFR_2$ | [g/10'] | | | | | | 3.7 |
| H2/C3 | mol/kmol | | | | | | 14.0 |
| pressure | [bar] | | | | | | 19 |

(continued)

| **Final** | | | | | | | |
|---|---|---|---|---|---|---|---|
| XCS | [wt%] | 3.6 | 3.4 | 3.3 | 3.2 | 3.1 | 3.2 |
| $MFR_2$ | [g/10'] | 5.2 | 5.9 | 6.1 | 5.7 | 5.3 | 2.5 |
| Mw/Mn | [-] | 12.7 | - | 12.2 | - | 12.2 | 10.2 |
| Tm | [°C] | 163 | 162 | 162 | 163 | 163 | 163 |
| 2,1 e | [%] | n.d. | n.d. | n.d. | n.d. | n.d. | n.d. |
| mmmm | [%] | 94.6 | 94.1 | 94.6 | 94.1 | 95.3 | 94.8 |
| Ash | [ppm] | 16 | 18 | 23 | 25 | 29 | 15 |
| Al | [ppm] | 5.2 | 3.2 | 4.7 | 5.1 | 5.5 | 3.6 |
| Mg | [ppm] | 1.4 | 1.9 | 2.3 | 1.9 | 2.0 | 3.9 |
| Cl | [ppm] | 0 | 3.1 | 4.2 | 3.2 | 3.9 | <1 |
| Productivity | [kg/g] | 92.8 | 66.9 | 73.4 | 79.3 | 77.3 | 135 |
| n.d. = not detectable | | | | | | | |

**Table 1b:** Preparation of comparative propylene homopolymers (H-PP)

| | | **CE1** | **CE2** | **CE3** | **CE4** |
|---|---|---|---|---|---|
| TEAL/Ti | [mol/mol] | 55 | 61 | 160 | 160 |
| TEAL/Donor | [mol/mol] | 10 | 25 | 40 | 10 |
| Donor/Ti | [mol/mol] | 5.5 | 2.4 | 4.0 | 16.0 |
| LOOP | | | | | |
| time | [min] | 30 | 30 | 30 | 30 |
| temp | [°C] | 80 | 80 | 80 | 80 |
| split | [wt.-%] | 54 | 52 | 57 | 59 |
| $MFR_2$ | [g/10'] | 4.0 | 4.0 | 4.0 | 4.0 |
| H2/C3 | [mol/kmol] | 3.46 | 3.46 | 3.46 | 3.46 |
| pressure | [bar] | 37.3 | 37.3 | 37.3 | 37.3 |
| **GPR** | | | | | |
| time | [min] | 180 | 180 | 180 | 180 |
| temp | [°C] | 80 | 80 | 80 | 80 |
| split | [wt.-%] | 46 | 48 | 43 | 41 |
| $MFR_2$ | [g/10'] | 6.8 | 7.2 | 7.2 | 5.1 |
| H2/C3 | mol/kmol | 18.33 | 18.33 | 18.33 | 18.33 |
| pressure | [bar] | 22 | 22 | 22 | 22 |
| **Final** | | | | | |
| XCS | [wt%] | 2.7 | 3.1 | 2.9 | 2.4 |
| $MFR_2$ | [g/10'] | 5.1 | 5.3 | 5.2 | 4.4 |
| Mw/Mn | [-] | - | 11.4 | 10.4 | 12.8 |
| Tm | [°C] | 163 | 163 | 163 | 164 |

(continued)

| Final | | | | | |
|---|---|---|---|---|---|
| 2,1 e | [%] | n.d. | n.d. | n.d. | n.d. |
| mmmm | [%] | 95.4 | 94.6 | 95.4 | 96.2 |
| Ash | [ppm] | 30 | 36 | 55 | 78 |
| Al | [ppm] | 9.0 | 9.2 | 19.7 | 24.0 |
| Mg | [ppm] | 2.0 | 2.0 | 1.8 | 2.0 |
| Cl | [ppm] | 3.7 | 2.5 | 4.9 | 3.2 |
| Productivity | [kg/g] | 79.1 | 90.4 | 88.9 | 75.4 |
| n.d. = not detectable | | | | | |

**Table 2**: SIST data of the examples

| | **IE1** | **IE2** | **IE3** | **IE4** | **IE5** | **IE6** | **CE1** | **CE2** | **CE3** | **CE4** |
|---|---|---|---|---|---|---|---|---|---|---|
| Temp. Range/ °C | [wt%] | [wt%] | [wt%] | [wt%] | [wt%] | [wt%] | [wt%] | [wt%] | [wt%] | [wt%] |
| 90-100 | 1.20 | 0.00 | 0.00 | 0.06 | 0.00 | 0 | 0.00 | 0.00 | 0.00 | 0.00 |
| 100-110 | 0.65 | 0.04 | 0.03 | 0.13 | 0.04 | 0 | 0.05 | 0.05 | 0.06 | 0.05 |
| 110-120 | 1.10 | 0.39 | 0.38 | 0.47 | 0.39 | 0.23 | 0.39 | 0.43 | 0.46 | 0.40 |
| 120-130 | 1.85 | 1.06 | 1.06 | 1.14 | 1.08 | 0.97 | 1.06 | 1.13 | 1.17 | 1.07 |
| 130-140 | 3.31 | 2.48 | 2.52 | 2.52 | 2.56 | 2.61 | 2.44 | 2.60 | 9.42 | 2.45 |
| 140-150 | 9.85 | 8.88 | 9.33 | 8.88 | 9.07 | 9.22 | 9.03 | 9.28 | 2.60 | 8.95 |
| 150-160 | 26.10 | 24.87 | 25.61 | 24.54 | 25.75 | 24.83 | 25.23 | 25.49 | 25.32 | 23.45 |
| 160-170 | 47.41 | 45.85 | 47.18 | 45.94 | 48.38 | 45 | 47.42 | 46.68 | 46.67 | 41.67 |
| 170-180 | 8.49 | 16.42 | 13.92 | 16.35 | 12.72 | 17.1 | 14.40 | 14.36 | 14.34 | 21.95 |
| 180- | 0.00 | 0.00 | 0.00 | 0.00 | 0.00 | 0 | 0.00 | 0.00 | 0.00 | 0.00 |
| | | | | | | | | | | |
| SIST ratio | 1.30 | 1.65 | 1.57 | 1.65 | 1.57 | 1.64 | 1.62 | 1.57 | 1.56 | 1.75 |
| SIST ratio: the weight ratio of the crystalline fractions melting in the temperature range of above 160 to 180 °C to the crystalline fractions melting in the temperature range of 90 to 160 [(< 160-180) / (90-160)] | | | | | | | | | | |

## Claims

**1.** Process for the manufacture of propylene homopolymer (H-PP) in a sequential polymerization system comprising at least two polymerization reactors ((R1) and (R2) connected in series, wherein the polymerization of propylene in the at least two polymerization reactors ((R1) and (R2)) takes place in the presence of

(a) a Ziegler-Natta catalyst (ZN-C) comprising a titanium compound (TC) having at least one titanium-halogen bond, and an internal donor (ID), both supported on a magnesium halide,
(b) a co-catalyst (Co), and
(c) an external donor (ED),

wherein

(i) the internal donor (ID) comprises at least 80 wt.-% of a succinate;
(ii) the molar-ratio of co-catalyst (Co) to external donor (ED) [Co/ED] is 10 to 45; and

(iii) the molar-ratio of co-catalyst (Co) to titanium compound (TC) [Co/TC] is 8 to 45
(iv) the propylene homopolymer (H-PP) has a molecular weight distribution (Mw/Mn) of at least 10.0.

**2.** Process for the manufacture of propylene homopolymer (H-PP) in a sequential polymerization system comprising at least three polymerization reactors ((R1), (R2) and (R3) connected in series, wherein the polymerization of propylene in the at least three polymerization reactors ((R1), (R2) and (R3)) takes place in the presence of

(a) a Ziegler-Natta catalyst (ZN-C) comprising a titanium compound (TC) having at least one titanium-halogen bond, and an internal donor (ID), both supported on a magnesium halide,
(b) a co-catalyst (Co), and
(c) an external donor (ED),

wherein

(ii) the internal donor (ID) comprises at least 80 wt.-% of a succinate;
(ii) the molar-ratio of co-catalyst (Co) to external donor (ED) [Co/ED] is 10 to 45; and
(iii) the molar-ratio of co-catalyst (Co) to titanium compound (TC) [Co/TC] is 8 to 45
(iv) the propylene homopolymer (H-PP) has a molecular weight distribution (Mw/Mn) of at least 10.0.

**3.** Process according to claim 1 or 2, the molar-ratio of external donor (ED) to titanium compound [ED/TC] is in the range of more than 0.5 to below 2.6, preferably in the range of 0.7 to 2.0.

**4.** Process according to any one of the preceding claims, wherein

(a) the total average residence time is at least 160 min, preferably at least 180 min;
and/or
(b) the average residence time in the first polymerization reactor (R1) is at least 20 min;
and/or
(c) the average residence time in the second polymerization reactor (R2) is at least 90 min;
and/or
(d) the average residence time in the third polymerization reactor (R3) - if present - is at least 30 min.

**5.** Process according to any one of the preceding claims, wherein at least one of the polymerization reactors is a gas phase reactor, preferably the first polymerization reactor (R1) is a loop reactor (LR), the second polymerization reactor is a (first) gas phase reactor (GPR1) and the optional third polymerization reactor is a second gas phase reactor (GPR2).

**6.** Process according to any one of the preceding claims, wherein

(a) the operating temperature in the first polymerization reactor (R1) is in the range of 70 to 85 °C;
and/or
(b) the operating temperature in the second polymerization reactor (R2) is in the range of 75 to 95 °C;
and/or
(c) the operating temperature in the third polymerization reactor (R3) - if present - is in the range of 75 to 95 °C.

**7.** Process according to any one of the preceding claims, wherein the propylene homopolymer (H-PP) is discharged from the polymerization system without any washing and optionally converted to pellets.

**8.** Process according to any one of the preceding claims, wherein the internal donor (ID) is a succinate.

**9.** Process according to any one of the preceding claims, wherein the propylene homopolymer (H-PP) comprises a first propylene homopolymer fraction (H-PP1), a second propylene homopolymer fraction (H-PP2) and optionally a third propylene homopolymer fraction (H-PP3).

**10.** Process according to claim 9, wherein

(a) the weight ratio between the first propylene homopolymer fraction (H-PP1) and the second propylene homopolymer fraction (H-PP2) [(H-PP1):(H-PP2)] is 70:30 to 35:65;

and/or

(b) the first propylene homopolymer fraction (H-PP1) is produced in the first polymerization reactor (R1) whereas the second propylene homopolymer fraction (H-PP2) is produced in the second polymerization reactor (R2) and the optional third propylene homopolymer fraction (H-PP3) is produced in the second polymerization reactor (R3).

**11.** Process according to claim 9 or 10, wherein

(a) the first propylene homopolymer fraction (H-PP1) and the second propylene homopolymer fraction (H-PP2) fulfill together the inequation (I)

$$4.0 \geq \frac{MFR\,(\text{H-PP2})}{MFR\,(\text{H-PP1})} \geq 1.0 \qquad \text{(I)}$$

wherein

MFR (H-PP1) is the melt flow rate $MFR_2$ (230 °C) [g/10min] of the first propylene homopolymer fraction (H-PP 1),
MFR (H-PP2) is the melt flow rate $MFR_2$ (230 °C) [g/10min] of the second propylene homopolymer fraction (H-PP2);
and/or,

(b) the second propylene homopolymer fraction (H-PP2) and the third propylene homopolymer fraction (H-PP3) fulfill together the inequation (I)

$$2.0 \geq \frac{MFR\,(\text{H-PP3})}{MFR\,(\text{H-PP2})} \geq 0.5 \qquad \text{(II)}$$

wherein

MFR (H-PP2) is the melt flow rate $MFR_2$ (230 °C) [g/10min] of the second propylene homopolymer fraction (H-PP2),
MFR (H-PP3) is the melt flow rate $MFR_2$ (230 °C) [g/10min] of the thrid propylene homopolymer fraction (H-PP3);
and/or

(c) the first propylene homopolymer fraction (H-PP1) and the propylene homopolymer (H-PP) fulfill together the inequation (III)

$$3.0 \geq \frac{MFR\,(\text{H-PP})}{MFR\,(\text{H-PP1})} \geq 1.0 \qquad \text{(III)}$$

wherein

MFR (H-PPI)is the melt flow rate $MFR_2$ (230 °C) [g/lOmin] of the first propylene homopolymer fraction (H-PP1),
MFR (H-PP) is the melt flow rate $MFR_2$ (230 °C) [g/10min] of the propylene homopolymer (H-PP).

**12.** Process according to any one of the preceding claims, wherein the propylene homopolymer (H-PP) has

(a) a melt flow rate $MFR_2$ (230 °C) measured according to ISO 1133 in the range of 1.5 to 10.0 g/10min;
and/or
(b) a xylene cold soluble content (XCS) determined according ISO 16152 (25 °C) of at least 2.8 wt.-%.

**13.** Process according to any one of the preceding claims wherein the propylene homopolymer (H-PP) has

(a) 2,1 erythro regio-defects of equal or below 0.4 mol.-% determined by $^{13}C$-NMR spectroscopy;
and/or
(b) a pentad isotacticity (mmmm) of more than 93.5 mol.-%, preferably in the range of more than 93.5 to 97.0 mol-%;
and/or
(c) an ash content below 30 ppm, preferably below 25 ppm.

**14.** Process according to any one of the preceding claims wherein the propylene homopolymer (H-PP) has

(a) a melting temperature Tm of more than 160 °C;
and/or
(b) a weight ratio of the crystalline fractions melting in the temperature range of above 160 to 180 °C to the crystalline fractions melting in the temperature range of 90 to 160 [(< 160-180) / (90-160)] of at least 1.20, wherein said fractions are determined by the stepwise isothermal segregation technique (SIST).

**15.** Propylene homopolymer (H-PP) having

(a) a melt flow rate $MFR_2$ (230 °C) measured according to ISO 1133 in the range of 1.5 to 10.0 g/10min;
(b) a molecular weight distribution (MWD) of at least 10.0;
(c) a xylene cold soluble content (XCS) determined according ISO 16152 (25 °C) of at least 2.8 wt.-%;
(d) a pentad isotacticity (mmmm) of more than 93.5 mol.-%, preferably in the range of more than 93.5 to 97.0 mol-%, and
(e) an ash content below 30 ppm, preferably below 25 ppm.

**16.** Propylene homopolymer according to claim 15, wherein said propylene homopolymer (H-PP) has

(a) 2,1 erythro regio-defects of equal or below 0.4 mol.-% determined by $^{13}C$-NMR spectroscopy,
and/or
(b) a melting temperature Tm of more than 160 °C,
and/or
(c) a weight ratio of the crystalline fractions melting in the temperature range of above 160 to 180 °C to the crystalline fractions melting in the temperature range of 90 to 160 [(< 160-180) / (90-160)] of at least 1.20, wherein said fractions are determined by the stepwise isothermal segregation technique (SIST).

**17.** Propylene homopolymer (H-PP) according to claim 15 or 16, wherein said propylene homopolymer (H-PP) has a first propylene homopolymer fraction (H-PP1), a second propylene homopolymer fraction (H-PP2) and optional a third propylene homopolymer fraction (H-PP3), wherein

(a) the first propylene homopolymer fraction (H-PP1) and the second propylene homopolymer fraction (H-PP2) fulfill together the inequation (I)

$$4.0 \geq \frac{MFR\,(H-PP2)}{MFR\,(H-PP1)} \geq 1.0 \qquad (I)$$

wherein

MFR (H-PP1) is the melt flow rate $MFR_2$ (230 °C) [g/10min] of the first propylene homopolymer fraction (H-PP1),
MFR (H-PP2) is the melt flow rate $MFR_2$ (230 °C) [g/10min] of the second propylene homopolymer fraction (H-PP2);
and/or,

(b) the second propylene homopolymer fraction (H-PP2) and the third propylene homopolymer fraction (H-PP3) fulfill together the inequation (I)

$$2.0 \geq \frac{MFR\,(H-PP3)}{MFR\,(H-PP2)} \geq 0.5 \qquad (II)$$

wherein

MFR (H-PP2) is the melt flow rate $MFR_2$ (230 °C) [g/10min] of the second propylene homopolymer fraction (H-PP2),
MFR (H-PP3) is the melt flow rate $MFR_2$ (230 °C) [g/10min] of the thrid propylene homopolymer fraction (H-PP3);
and/or

(c) the first propylene homopolymer fraction (H-PP1) and the propylene homopolymer (H-PP) fulfill together the inequation (III)

$$3.0 \geq \frac{MFR\,(H-PP)}{MFR\,(H-PP1)} \geq 1.0 \qquad (III)$$

wherein

MFR (H-PP1) is the melt flow rate $MFR_2$ (230 °C) [g/10min] of the first propylene homopolymer fraction (H-PP1),
MFR (H-PP) is the melt flow rate $MFR_2$ (230 °C) [g/10min] of the propylene homopolymer (H-PP);
and/or,

(d) the weight ratio between the first propylene homopolymer fraction (H-PP1) and the second propylene homopolymer fraction (H-PP2) [(H-PP1):(H-PP2)] is 70:30 to 35:65.

**18.** Propylene homopolymer (H-PP) according to any one of claims 15 to 17, wherein the propylene homopolymer (H-PP) has been produced according to one of the claims 1 to 14.

**19.** Biaxially oriented film comprising a propylene homopolymer (H-PP) according to one of the preceding claims 15 to 18.

**Patentansprüche**

**1.** Verfahren zur Herstellung von Propylen-Homopolymer (H-PP) in einem sequentiellen Polymerisations-System, das mindestens zwei in Reihe geschaltete Polymerisations-Reaktoren ((R1) und (R2)) umfasst, wobei die Polymerisation von Propylen in den mindestens zwei Polymerisations-Reaktoren ((R1) und (R2)) stattfindet in Gegenwart von

(a) einem Ziegler-Natta-Katalysator (ZN-C), der eine Titan-Verbindung (TC) mit mindestens einer Titan-Halogen-Bindung und einen inneren Donor (ID) umfasst, die beide auf einem Magnesiumhalogenid getragen werden,
(b) einem Co-Katalysator (Co) und
(c) einem äußeren Donor (ED),

wobei

(i) der innere Donor (ID) mindestens 80 Gew.-% eines Succinats umfasst;
(ii) das Mol-Verhältnis von Co-Katalysator (Co) zu äußerem Donor (ED) [Co/ED] 10 bis 45 beträgt; und
(iii) das Mol-Verhältnis von Co-Katalysator (Co) zu Titan-Verbindung (TC) [Co/TC] 8 bis 45 beträgt
(iv) das Propylen-Homopolymer (H-PP) eine Molekulargewichtsverteilung (Mw/Mn) von mindestens 10,0 aufweist.

**2.** Verfahren zur Herstellung von Propylen-Homopolymer (H-PP) in einem sequentiellen Polymerisations-System, das mindestens drei in Reihe geschaltete Polymerisations-Reaktoren ((R1), (R2) und (R3) umfasst, wobei die Polymerisation von Propylen in den mindestens drei Polymerisations-Reaktoren ((R1), (R2) und (R3)) stattfindet in Gegenwart von

(a) einem Ziegler-Natta-Katalysator (ZN-C), der eine Titan-Verbindung (TC) mit mindestens einer Titan-Halogen-Bindung und einen inneren Donor (ID) umfasst, die beide auf einem Magnesiumhalogenid getragen werden,
(b) einem Co-Katalysator (Co) und
(c) einem äußeren Donor (ED),

wobei

(i) der innere Donor (ID) zu mindestens 80 Gew.-% eines Succinats besteht;
(ii) das Mol-Verhältnis von Co-Katalysator (Co) zu äußerem Donor (ED) [Co/ED] 10 bis 45 beträgt; und
(iii) das Mol-Verhältnis von Co-Katalysator (Co) zu Titan-Verbindung (TC) [Co/TC] 8 bis 45 beträgt
(iv) das Propylen-Homopolymer (H-PP) eine Molekulargewichtsverteilung (Mw/Mn) von mindestens 10,0 aufweist.

**3.** Verfahren nach Anspruch 1 oder 2, wobei das Molverhältnis von äußerem Donor (ED) zu Titan-Verbindung [ED/TC] im Bereich von mehr als 0,5 bis unter 2,6, vorzugsweise im Bereich von 0,7 bis 2,0, liegt.

**4.** Verfahren nach einem der vorangehenden Ansprüche, wobei

(a) die durchschnittliche Gesamtverweilzeit mindestens 160 Minuten, vorzugsweise mindestens 180 Minuten, beträgt;
und/oder
(b) die durchschnittliche Verweilzeit im ersten Polymerisations-Reaktor (R1) mindestens 20 Minuten beträgt;
und/oder
(c) die durchschnittliche Verweilzeit im zweiten Polymerisations-Reaktor (R2) mindestens 90 Minuten beträgt;
und/oder
(d) die durchschnittliche Verweilzeit im dritten Polymerisations-Reaktor (R3) - falls vorliegend - mindestens 30 Minuten beträgt.

**5.** Verfahren nach einem der vorangehenden Ansprüche, wobei mindestens einer der Polymerisations-Reaktoren ein Gasphasenreaktor ist, vorzugsweise der erste Polymerisations-Reaktor (R1) ein Schleifenreaktor (LR) ist, der zweite Polymerisations-Reaktor ein (erster) Gasphasenreaktor (GPR1) ist und der gegebenenfalls dritte Polymerisations-Reaktor ein zweiter Gasphasenreaktor (GPR2) ist.

**6.** Verfahren nach einem der vorangehenden Ansprüche, wobei

(a) die Betriebstemperatur im ersten Polymerisations-Reaktor (R1) im Bereich von 70 bis 85°C liegt;
und/oder
(b) die Betriebstemperatur im zweiten Polymerisations-Reaktor (R2) im Bereich von 75 bis 95°C liegt;
und/oder
(c) die Betriebstemperatur im dritten Polymerisations-Reaktor (R3) - falls vorliegend - im Bereich von 75 bis 95°C liegt.

**7.** Verfahren nach einem der vorangehenden Ansprüche, wobei das Propylen-Homopolymer (H-PP) ohne Waschen aus dem Polymerisations-System ausgegeben und gegebenenfalls in Pellets umgewandelt wird.

**8.** Verfahren nach einem der vorangehenden Ansprüche, wobei der innere Donor (ID) ein Succinat ist.

**9.** Verfahren nach einem der vorangehenden Ansprüche, wobei das Propylen-Homopolymer (H-PP) eine erste Propylen-Homopolymer-Fraktion (H-PP1), eine zweite Propylen-Homopolymer-Fraktion (H-PP2) und gegebenenfalls eine dritte Propylen-Homopolymer-Fraktion (H-PP3) umfasst.

**10.** Verfahren nach Anspruch 9, wobei

(a) das Gewichtsverhältnis zwischen der ersten Propylen-Homopolymer-Fraktion (H-PP1) und der zweiten Propylen-Homopolymer-Fraktion (H-PP2) [(H-PP1) : (H-PP2)] 70:30 bis 35:65 beträgt;
und/oder
(b) die erste Propylen-Homopolymer-Fraktion (H-PP1) im ersten Polymerisations-Reaktor (R1) hergestellt wird, während die zweite Propylen-Homopolymer-Fraktion (H-PP2) im zweiten Polymerisations-Reaktor (R2) hergestellt wird und die gegebenenfalls dritte Propylen-Homopolymer-Fraktion (H-PP3) im dritten Polymerisations-Reaktor (R3) hergestellt wird.

**11.** Verfahren nach Anspruch 9 oder 10, wobei

(a) die erste Propylen-Homopolymer-Fraktion (H-PP1) und die zweite Propylen-Homopolymer-Fraktion (H-PP2) zusammen die Ungleichung (I) erfüllen

$$4{,}0 \geq \frac{MFR(H-PP2)}{MFR(H-PP1)} \geq 1{,}0 \qquad (\mathrm{I})$$

worin

MFR (H-PP1) die Schmelze-Fließ-Rate $MFR_2$ (230°C) [g/10 min] der ersten Propylen-Homopolymer-Fraktion (H-PP1) ist,
MFR (H-PP2) die Schmelze-Fließ-Rate $MFR_2$ (230°C) [g/10 min] der zweiten Propylen-Homopolymer-Fraktion (H-PP2) ist;
und/oder

(b) die zweite Propylen-Homopolymer-Fraktion (H-PP2) und die dritte Propylen-Homopolymer-Fraktion (H-PP3) zusammen die Ungleichung (II) erfüllen

$$2{,}0 \geq \frac{MFR(H-PP3)}{MFR(H-PP2)} \geq 0{,}5 \qquad (\mathrm{II})$$

worin

MFR (H-PP2) die Schmelze-Fließ-Rate $MFR_2$ (230°C) [g/10 min] der zweiten Propylen-Homopolymer-Fraktion (H-PP2) ist,
MFR (H-PP3) die Schmelze-Fließ-Rate $MFR_2$ (230°C) [g/10 min] der dritten Propylen-Homopolymer-Fraktion (H-PP3) ist;
und/oder

(c) die erste Propylen-Homopolymer-Fraktion (H-PP1) und das Propylen-Homopolymer (H-PP) zusammen die Ungleichung (III) erfüllen

$$3{,}0 \geq \frac{MFR(H-PP)}{MFR(H-PP1)} \geq 1{,}0 \qquad (\mathrm{III})$$

worin

MFR (H-PP1) die Schmelze-Fließ-Rate $MFR_2$ (230°C) [g/10 min] der ersten Propylen-Homopolymer-Fraktion (H-PP1) ist,
MFR (H-PP) die Schmelze-Fließ-Rate $MFR_2$ (230°C) [g/10 min] des Propylen-Homopolymers (H-PP) ist.

**12.** Verfahren nach einem der vorangehenden Ansprüche, wobei das Propylen-Homopolymer (H-PP) aufweist

(a) eine Schmelze-Fließ-Rate $MFR_2$ (230°C), gemessen gemäß ISO 1133, im Bereich von 1,5 bis 10,0 g/10 min; und/oder
(b) einen in kaltem Xylol löslichen Gehalt (XCS), bestimmt gemäß ISO 16152 (25°C), von mindestens 2,8 Gew.-%.

**13.** Verfahren nach einem der vorangehenden Ansprüche, wobei das Propylen-Homopolymer (H-PP) aufweist

(a) 2,1-Erythro-Regio-Defekte von gleich oder unter 0,4 Mol-%, bestimmt durch $^{13}$C-NMR-Spektroskopie;

und/oder
(b) eine Pentaden-Isotaktizität (mmmm) von mehr als 93,5 Mol-%, vorzugsweise im Bereich von mehr als 93,5 bis 97,0 Mol-%;
und/oder
(c) einen Aschegehalt unter 30 ppm, vorzugsweise unter 25 ppm.

**14.** Verfahren nach einem der vorangehenden Ansprüche, wobei das Propylen-Homopolymer (H-PP) aufweist

(a) eine Schmelztemperatur Tm von mehr als 160°C; und/oder
(b) ein Gewichtsverhältnis der kristallinen Fraktionen, die im Temperaturbereich von über 160 bis 180°C schmelzen, zu den kristallinen Fraktionen, die im Temperaturbereich von 90 bis 160 [(< 160-180)/(90-160)] schmelzen, von mindestens 1,20, wobei die Fraktionen durch die schrittweise isotherme Segregations-Technik (SIST) bestimmt werden.

**15.** Propylen-Homopolymer (H-PP) mit

(a) einer Schmelze-Fließ-Rate $MFR_2$ (230°C), gemessen gemäß ISO 1133, im Bereich von 1,5 bis 10,0 g/10 min;
(b) einer Molekulargewichtsverteilung (MWD) von mindestens 10,0;
(c) einem in kaltem Xylol löslichen Gehalt (XCS), bestimmt gemäß ISO 16152 (25°C), von mindestens 2,8 Gew.-%;
(d) einer Pentaden-Isotaktizität (mmmm) von mehr als 93,5 Mol-%, vorzugsweise im Bereich von mehr als 93,5 bis 97,0 Mol-%, und
(e) einem Aschegehalt unter 30 ppm, vorzugsweise unter 25 ppm.

**16.** Propylen-Homopolymer nach Anspruch 15, wobei das Propylen-Homopolymer (H-PP) aufweist

(a) 2,1-Erythro-Regio-Defekte von gleich oder unter 0,4 Mol-%, bestimmt durch $^{13}C$-NMR-Spektroskopie, und/oder
(b) eine Schmelztemperatur Tm von mehr als 160°C, und/oder
(c) ein Gewichtsverhältnis der kristallinen Fraktionen, die im Temperaturbereich von über 160 bis 180°C schmelzen, zu den kristallinen Fraktionen, die im Temperaturbereich von 90 bis 160 [(< 160-180)/ (90-160)] schmelzen, von mindestens 1,20, wobei die Fraktionen durch die schrittweise isotherme Segregations-Technik (SIST) bestimmt werden.

**17.** Propylen-Homopolymer (H-PP) nach Anspruch 15 oder 16, wobei das Propylen-Homopolymer (H-PP) eine erste Propylen-Homopolymer-Fraktion (H-PP1), eine zweite Propylen-Homopolymer-Fraktion (H-PP2) und gegebenenfalls eine dritte Propylen-Homopolymer-Fraktion (H-PP3) aufweist, wobei

(a) die erste Propylen-Homopolymer-Fraktion (H-PP1) und die zweite Propylen-Homopolymer-Fraktion (H-PP2) zusammen die Ungleichung (I) erfüllen

$$4{,}0 \geq \frac{MFR(H-PP2)}{MFR(H-PP1)} \geq 1{,}0 \qquad (\mathrm{I})$$

worin

MFR (H-PP1) die Schmelze-Fließ-Rate $MFR_2$ (230°C) [g/10 min] der ersten Propylen-Homopolymer-Fraktion (H-PP1) ist,
MFR (H-PP2) die Schmelze-Fließ-Rate $MFR_2$ (230°C) [g/10 min] der zweiten Propylen-Homopolymer-Fraktion (H-PP2) ist;
und/oder

(b) die zweite Propylen-Homopolymer-Fraktion (H-PP2) und die dritte Propylen-Homopolymer-Fraktion (H-PP3) zusammen die Ungleichung (II) erfüllen

$$2{,}0 \geq \frac{MFR(H-PP3)}{MFR(H-PP2)} \geq 0{,}5 \qquad (II)$$

worin

MFR (H-PP2) die Schmelze-Fließ-Rate $MFR_2$ (230°C) [g/10 min] der zweiten Propylen-Homopolymer-Fraktion (H-PP2) ist,
MFR (H-PP3) die Schmelze-Fließ-Rate $MFR_2$ (230°C) [g/10 min] der dritten Propylen-Homopolymer-Fraktion (H-PP3) ist;
und/oder

(c) die erste Propylen-Homopolymer-Fraktion (H-PP1) und das Propylen-Homopolymer (H-PP) zusammen die Ungleichung (III) erfüllen

$$3{,}0 \geq \frac{MFR(H-PP)}{MFR(H-PP1)} \geq 1{,}0 \qquad (III)$$

worin

MFR (H-PP1) die Schmelze-Fließ-Rate $MFR_2$ (230°C) [g/10 min] der ersten Propylen-Homopolymer-Fraktion (H-PP1) ist,
MFR (H-PP) die Schmelze-Fließ-Rate $MFR_2$ (230°C) [g/10 min] des Propylen-Homopolymers (H-PP) ist;
und/oder

(d) das Gewichtsverhältnis zwischen der ersten Propylen-Homopolymer-Fraktion (H-PP1) und der zweiten Propylen-Homopolymer-Fraktion (H-PP2) [(H-PP1) : (H-PP2)] 70:30 bis 35:65 ist.

**18.** Propylen-Homopolymer (H-PP) nach einem der Ansprüche 15 bis 17, wobei das Propylen-Homopolymer (H-PP) nach einem der Ansprüche 1 bis 14 hergestellt wurde.

**19.** Biaxial verstreckte Folie, die ein Propylen-Homopolymer (H-PP) nach einem der vorangehenden Ansprüche 15 bis 18 umfasst.

## Revendications

**1.** Procédé pour la fabrication d'un homopolymère de propylène (H-PP) dans un système de polymérisation séquentielle comprenant au moins deux réacteurs de polymérisation ((R1) et (R2)) connectés en série, dans lequel la polymérisation de propylène dans les au moins deux réacteurs de polymérisation ((R1) et (R2)) a lieu en présence de

(a) un catalyseur de Ziegler-Natta (ZN-C) comprenant un composé du titane (TC) ayant au moins une liaison titane-halogène, et un donneur interne (ID), les deux supportés sur un halogénure de magnésium,
(b) un co-catalyseur (Co), et
(c) un donneur externe (ED),

dans lequel

(i) le donneur interne (ID) comprend au moins 80 % en poids d'un succinate ;
(ii) le rapport molaire du co-catalyseur (Co) sur le donneur externe (ED) [Co/ED] est de 10 à 45 ; et
(iii) le rapport molaire du co-catalyseur (Co) sur le composé du titane (TC) [Co/TC] est de 8 à 45,
(iv) l'homopolymère de propylène (H-PP) a une distribution des masses moléculaires (Mw/Mn) d'au moins 10,0.

**2.** Procédé pour la fabrication d'un homopolymère de propylène (H-PP) dans un système de polymérisation séquentielle comprenant au moins trois réacteurs de polymérisation ((R1), (R2) et (R3)) connectés en série, dans lequel la polymérisation de propylène dans les au moins trois réacteurs de polymérisation ((R1), (R2) et (R3)) a lieu en présence de

(a) un catalyseur de Ziegler-Natta (ZN-C) comprenant un composé du titane (TC) ayant au moins une liaison titane-halogène, et un donneur interne (ID), les deux supportés sur un halogénure de magnésium,
(b) un co-catalyseur (Co), et
(c) un donneur externe (ED),

dans lequel

(i) le donneur interne (ID) comprend au moins 80 % en poids d'un succinate ;
(ii) le rapport molaire du co-catalyseur (Co) sur le donneur externe (ED) [Co/ED] est de 10 à 45 ; et
(iii) le rapport molaire du co-catalyseur (Co) sur le composé du titane (TC) [Co/TC] est de 8 à 45,
(iv) l'homopolymère de propylène (H-PP) a une distribution des masses moléculaires (Mw/Mn) d'au moins 10,0.

**3.** Procédé selon la revendication 1 ou 2, dans lequel le rapport molaire du donneur externe (ED) sur le composé du titane [ED/TC] est dans la plage de plus de 0,5 à moins de 2,6, de préférence dans la plage de 0,7 à 2,0.

**4.** Procédé selon l'une quelconque des revendications précédentes, dans lequel

(a) le temps de séjour moyen total est d'au moins 160 minutes, de préférence d'au moins 180 minutes ; et/ou
(b) le temps de séjour moyen dans le premier réacteur de polymérisation (R1) est d'au moins 20 minutes ; et/ou
(c) le temps de séjour moyen dans le deuxième réacteur de polymérisation (R2) est d'au moins 90 minutes ; et/ou
(d) le temps de séjour moyen dans le troisième réacteur de polymérisation (R3) - s'il est présent - est d'au moins 30 minutes.

**5.** Procédé selon l'une quelconque des revendications précédentes, dans lequel au moins l'un des réacteurs de polymérisation est un réacteur en phase gazeuse, de préférence le premier réacteur de polymérisation (R1) est un réacteur à boucle (LR), le deuxième réacteur de polymérisation est un (premier) réacteur en phase gazeuse (GPR1) et le troisième réacteur de polymérisation optionnel est un deuxième réacteur en phase gazeuse (GPR2).

**6.** Procédé selon l'une quelconque des revendications précédentes, dans lequel

(a) la température de service dans le premier réacteur de polymérisation (R1) est dans la plage de 70 à 85°C ; et/ou
(b) la température de service dans le deuxième réacteur de polymérisation (R2) est dans la plage de 75 à 95°C ; et/ou
(c) la température de service dans le troisième réacteur de polymérisation (R3) - s'il est présent - est dans la plage de 75 à 95°C.

**7.** Procédé selon l'une quelconque des revendications précédentes, dans lequel l'homopolymère de propylène (H-PP) est déchargé hors du système de polymérisation sans aucun lavage et optionnellement converti en pastilles.

**8.** Procédé selon l'une quelconque des revendications précédentes, dans lequel le donneur interne (ID) est un succinate.

**9.** Procédé selon l'une quelconque des revendications précédentes, dans lequel l'homopolymère de propylène (H-PP) comprend une première fraction d'homopolymère de propylène (H-PP1), une deuxième fraction d'homopolymère de propylène (H-PP2) et optionnellement une troisième fraction d'homopolymère de propylène (H-PP3).

**10.** Procédé selon la revendication 9, dans lequel

(a) le rapport en poids entre la première fraction d'homopolymère de propylène (H-PP1) et la deuxième fraction d'homopolymère de propylène (H-PP2) [(H-PP1)/(H-PP2)] est de 70/30 à 35/65 ; et/ou
(b) la première fraction d'homopolymère de propylène (H-PP1) est produite dans le premier réacteur de polymérisation (R1) tandis que la deuxième fraction d'homopolymère de propylène (H-PP2) est produite dans le deuxième réacteur de polymérisation (R2) et la troisième fraction d'homopolymère de propylène optionnelle (H-PP3) est produite dans le troisième réacteur de polymérisation (R3) .

**11.** Procédé selon la revendication 9 ou 10, dans lequel

(a) la première fraction d'homopolymère de propylène (H-PP1) et la deuxième fraction d'homopolymère de propylène (H-PP2) satisfont ensemble à l'inégalité (I)

$$4,0 \geq \frac{MFR\ (\text{H-PP2})}{MFR\ (\text{H-PP1})} \geq 1,0 \qquad (I)$$

dans laquelle

MFR (H-PP1) est l'indice de fluage $MFR_2$ (230°C) [g/10 min] de la première fraction d'homopolymère de propylène (H-PP1),
MFR (H-PP2) est l'indice de fluage $MFR_2$ (230°C) [g/10 min] de la deuxième fraction d'homopolymère de propylène (H-PP2) ;
et/ou

(b) la deuxième fraction d'homopolymère de propylène (H-PP2) et la troisième fraction d'homopolymère de propylène (H-PP3) satisfont ensemble à l'inégalité (II)

$$2,0 \geq \frac{MFR\ (\text{H-PP3})}{MFR\ (\text{H-PP2})} \geq 0,5 \qquad (II)$$

dans laquelle

MFR (H-PP2) est l'indice de fluage $MFR_2$ (230°C) [g/10 min] de la deuxième fraction d'homopolymère de propylène (H-PP2),
MFR (H-PP3) est l'indice de fluage $MFR_2$ (230°C) [g/10 min] de la troisième fraction d'homopolymère de propylène (H-PP3) ;
et/ou

(c) la première fraction d'homopolymère de propylène (H-PP1) et l'homopolymère de propylène (H-PP) satisfont ensemble à l'inégalité (III)

$$3,0 \geq \frac{MFR\ (\text{H-PP})}{MFR\ (\text{H-PP1})} \geq 1,0 \qquad (III)$$

dans laquelle

MFR (H-PP1) est l'indice de fluage $MFR_2$ (230°C) [g/10 min] de la première fraction d'homopolymère de propylène (H-PP1),
MFR (H-PP) est l'indice de fluage $MFR_2$ (230°C) [g/10 min] de l'homopolymère de propylène (H-PP).

**12.** Procédé selon l'une quelconque des revendications précédentes, dans lequel l'homopolymère de propylène (H-PP) a

(a) un indice de fluage $MFR_2$ (230°C), mesuré conformément à la norme ISO 1133, dans la plage de 1,5 à 10,0 g/10 min ;
et/ou
(b) une teneur soluble à froid dans le xylène (XCS), déterminée conformément à la norme ISO 16152 (25°C), d'au moins 2,8 % en poids.

**13.** Procédé selon l'une quelconque des revendications précédentes, dans lequel l'homopolymère de propylène (H-PP) a

(a) des régio-défauts érythro 2,1 à raison de 0,4 % en moles ou moins, déterminés par spectroscopie RMN-$^{13}C$ ; et/ou
(b) une isotacticité de pentade (mmmm) supérieure à 93,5 % en moles, de préférence dans la plage de plus de 93,5 à 97,0 % en moles ;
et/ou
(c) une teneur en cendres inférieure à 30 ppm, de préférence inférieure à 25 ppm.

**14.** Procédé selon l'une quelconque des revendications précédentes, dans lequel l'homopolymère de propylène (H-PP) a

(a) un point de fusion Tm supérieur à 160°C ;
et/ou
(b) un rapport en poids des fractions cristallines fondant dans la plage de températures de plus de 160 à 180°C sur les fractions cristallines fondant dans la plage de températures de 90 à 160°C [(<160-180)/(90-160)] d'au moins 1,20, dans lequel lesdites fractions sont déterminées par la technique de ségrégation isotherme étagée (SIST).

**15.** Homopolymère de propylène (H-PP) ayant

(a) un indice de fluage $MFR_2$ (230°C), mesuré conformément à la norme ISO 1133, dans la plage de 1,5 à 10,0 g/10 min ;
(b) une distribution des masses moléculaires (MWD) d'au moins 10,0 ;
(c) une teneur soluble à froid dans le xylène (XCS), déterminée conformément à la norme ISO 16152 (25°C), d'au moins 2,8 % en poids ;
(d) une isotacticité de pentade (mmmm) supérieure à 93,5 % en moles, de préférence dans la plage de plus de 93,5 à 97,0 % en moles ; et
(e) une teneur en cendres inférieure à 30 ppm, de préférence inférieure à 25 ppm.

**16.** Homopolymère de propylène selon la revendication 15, dans lequel ledit homopolymère de propylène (H-PP) a

(a) des régio-défauts érythro 2,1 à raison de 0,4 % en moles ou moins, déterminés par spectroscopie RMN-$^{13}C$, et/ou
(b) un point de fusion Tm supérieur à 160°C,
et/ou
(c) un rapport en poids des fractions cristallines fondant dans la plage de températures de plus de 160 à 180°C sur les fractions cristallines fondant dans la plage de températures de 90 à 160°C [(<160-180)/(90-160)] d'au moins 1,20, dans lequel lesdites fractions sont déterminées par la technique de ségrégation isotherme étagée (SIST).

**17.** Homopolymère de propylène (H-PP) selon la revendication 15 ou 16, dans lequel ledit homopolymère de propylène (H-PP) a une première fraction d'homopolymère de propylène (H-PP1), une deuxième fraction d'homopolymère de propylène (H-PP2) et optionnellement une troisième fraction d'homopolymère de propylène (H-PP3), dans lequel

(a) la première fraction d'homopolymère de propylène (H-PP1) et la deuxième fraction d'homopolymère de propylène (H-PP2) satisfont ensemble à l'inégalité (I)

$$4{,}0 \geq \frac{MFR\ (\text{H-PP2})}{MFR\ (\text{H-PP1})} \geq 1{,}0 \qquad (I)$$

dans laquelle

MFR (H-PP1) est l'indice de fluage $MFR_2$ (230°C) [g/10 min] de la première fraction d'homopolymère de propylène (H-PP1),
MFR (H-PP2) est l'indice de fluage $MFR_2$ (230°C) [g/10 min] de la deuxième fraction d'homopolymère de

propylène (H-PP2) ;
et/ou

(b) la deuxième fraction d'homopolymère de propylène (H-PP2) et la troisième fraction d'homopolymère de propylène (H-PP3) satisfont ensemble à l'inégalité (II)

$$2{,}0 \geq \frac{MFR\ (\text{H-PP3})}{MFR\ (\text{H-PP2})} \geq 0{,}5 \qquad (\text{II})$$

dans laquelle

MFR (H-PP2) est l'indice de fluage $MFR_2$ (230°C) [g/10 min] de la deuxième fraction d'homopolymère de propylène (H-PP2),
MFR (H-PP3) est l'indice de fluage $MFR_2$ (230°C) [g/10 min] de la troisième fraction d'homopolymère de propylène (H-PP3) ;
et/ou

(c) la première fraction d'homopolymère de propylène (H-PP1) et l'homopolymère de propylène (H-PP) satisfont ensemble à l'inégalité (III)

$$3{,}0 \geq \frac{MFR\ (\text{H-PP})}{MFR\ (\text{H-PP1})} \geq 1{,}0 \qquad (\text{III})$$

dans laquelle

MFR (H-PP1) est l'indice de fluage $MFR_2$ (230°C) [g/10 min] de la première fraction d'homopolymère de propylène (H-PP1),
MFR (H-PP) est l'indice de fluage $MFR_2$ (230°C) [g/10 min] de l'homopolymère de propylène (H-PP) ;
et/ou

(d) le rapport en poids entre la première fraction d'homopolymère de propylène (H-PP1) et la deuxième fraction d'homopolymère de propylène (H-PP2) [(H-PP1)/(H-PP2)] est de 70/30 à 35/65.

**18.** Homopolymère de propylène (H-PP) selon l'une quelconque des revendications 15 à 17, dans lequel l'homopolymère de propylène (H-PP) a été produit conformément à l'une des revendications 1 à 14.

**19.** Film à orientation biaxiale comprenant un homopolymère de propylène (H-PP) selon l'une des revendications 15 à 18.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 887379 A
- EP 887380 A
- EP 887381 A
- EP 991684 A
- EP 0887379 A
- WO 9212182 A
- WO 2004000899 A
- WO 2004111095 A
- WO 9924478 A
- WO 9924479 A
- WO 0068315 A

### Non-patent literature cited in the description

- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromolecules,* 1997, vol. 30, 6251
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 11289
- **RESCONI, L. ; CAVALLO, L. ; FAIT, A. ; PIEMONTESI, F.** *Chem. Rev.,* 2000, vol. 100, 1253
- **WANG, W-J. ; ZHU, S.** *Macromolecules,* 2000, vol. 33, 1157
- **CHENG, H. N.** *Macromolecules,* 1984, vol. 17, 1950